# EUROPEAN PATENT APPLICATION

(11) **EP 4 775 363 A1**
(43) Date of publication of application: **15.07.2026**
(21) Application number: 24862380.3
(22) Date of filing: 13.05.2024
(51) Int. Cl.: B25J 15/08

(54) **HAND**

(30) Priority: 07.09.2023 JP 2023145390
(71) Applicant: KAWASAKI JUKOGYO KABUSHIKI KAISHA, Kobe-shi, Hyogo 650-8670 (JP)
(72) Inventor: MURASE Yohei, Kobe-shi, Hyogo 6508670 (JP); FUKUDA Hiroaki, Kobe-shi, Hyogo 6508670 (JP)
(74) Representative: Müller-Boré & Partner Patentanwälte PartG mbB
(86) International application number: PCT/JP2024/017616
(87) International publication number: WO 2025/052723

(57) **Abstract**

A hand 2 includes: a hand body 3; and fingers 4 that are located on the hand body 3 and open and close. Each of the fingers 4 includes an endless belt 5 that is wound around at least a distal end of the finger 4, is rotationally driven, and contacts a workpiece W. Each of the fingers 4 is elastically displaceable in a first direction X in which the fingers 4 open and close, and elastically displaceable in a second direction Y in which the fingers 4 advance from and retract to the hand body 3.

## Description

### FIELD

The technique disclosed here relates to hands.

### BACKGROUND

A hand including fingers with belts that are rotationally driven is known to date. For example, a hand described in Patent Document 1 includes two fingers. Each fingers includes a belt that is rotationally driven. The hand draws a workpiece into a space between the two fingers by rotationally driving the belts.

### CITATION LIST

### PATENT DOCUMENT

Patent Document 1: Japanese Patent Application Publication No. 2014-24143

### SUMMARY

In the case of drawing a workpiece into a space between fingers using a belt, the drawing of the workpiece is achieved by appropriately fitting the workpiece between the distal ends of the fingers. If position accuracy of the distal ends of the fingers with respect to the workpiece is low, the workpiece might not be drawn into a space between the fingers. In addition, if an interval between the fingers is not appropriately set with respect to a workpiece, the workpiece might not be drawn into the space between the fingers. The workpiece may be appropriately drawn by increasing position accuracy and interval accuracy of the fingers. However, the increase of position accuracy and interval accuracy of the fingers raises difficulty of control and reduces the speed of a control action.

It is therefore an object of the technique disclosed here to provide a hand that facilitates control for drawing a workpiece.

A hand disclosed here includes: a hand body; and fingers that are located on the hand body and open and close, wherein each of the fingers includes an endless belt that is wound around at least a distal end of the finger, is rotationally driven, and contacts a workpiece, and each of the fingers is elastically displaceable in a first direction in which the fingers open and close, and elastically displaceable in a second direction in which the fingers advance from and retract to the hand body.

The hand facilitates control for drawing a workpiece.

### BRIEF DESCRIPTION OF THE DRAWINGS

[FIG. 1] FIG. 1 is a schematic view illustrating a configuration of a robot system.
[FIG. 2] FIG. 2 is a front view of a hand.
[FIG. 3] FIG. 3 is a bottom view of the hand.
[FIG. 4] FIG. 4 is a cross-sectional view of the hand taken along line IV-IV in FIG. 3.
[FIG. 5] FIG. 5 is a cross-sectional view of the hand taken along line V-V in FIG. 3.
[FIG. 6] FIG. 6 is a cross-sectional view of the hand taken along line VI-VI in FIG. 4.
[FIG. 7] FIG. 7 is a perspective view of a finger.
[FIG. 8] FIG. 8 is a side view of the finger.
[FIG. 9] FIG. 9 is a cross-sectional view of the finger taken along line IX-IX in FIG. 8.
[FIG. 10] FIG. 10 is a front view of a finger body and a support.
[FIG. 11] FIG. 11 is a cross-sectional view of the finger taken along line XI-XI in FIG. 8.
[FIG. 12] FIG. 12 is a perspective view of the finger from an angle different from that in FIG. 7.
[FIG. 13] FIG. 13 is a front view of the finger.
[FIG. 14] FIG. 14 is a front view of the finger in a state where the finger body is displaced to a retracting side in second directions.
[FIG. 15] FIG. 15 illustrates a schematic hardware configuration of a controller.
[FIG. 16] FIG. 16 is a block diagram illustrating a configuration of a control system of a processor.
FIG. 17] FIG. 17 is a flowchart of a pick-and-place process.
FIG. 18] FIG. 18 is a schematic view for describing an example of a search action of the hand.
FIG. 19] FIG. 19 is a schematic view illustrating a case where a workpiece is successfully drawn.
[FIG. 20] FIG. 20 is a schematic view illustrating a state of the fingers during drawing of the workpiece.
[FIG. 21] FIG. 21 is a schematic view for describing another example of the search action of the hand.
[FIG. 22] FIG. 22 is a schematic view for describing another example of the search action of the hand.

### DESCRIPTION OF EMBODIMENTS

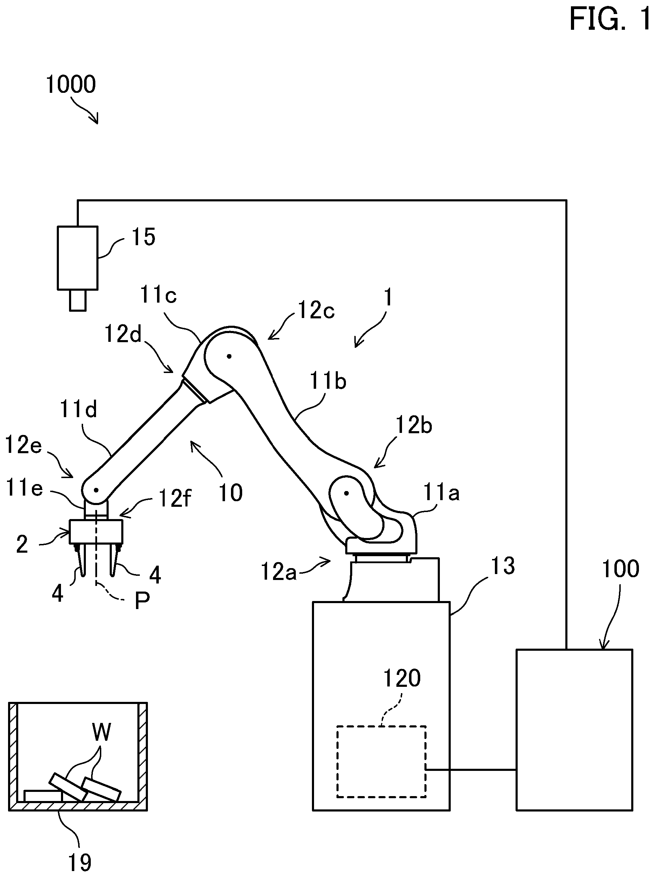

An exemplary embodiment will be described in detail hereinafter with reference to the drawings. FIG. 1 is a schematic view illustrating a configuration of a robot system 1000. In the present disclosure, parallel, orthogonal, same, coincide, simultaneous, or center includes not only strict parallel, orthogonal, same, coincide, simultaneous, or center but also substantially parallel, orthogonal, same, coincide, simultaneous, or center.

The robot system 1000 includes a hand 2, a robot arm 10 to which the hand 2 is coupled, and a controller 100 that controls the hand 2 and the robot arm 10. The hand 2 and the robot arm 10 are included in a robot 1. That is, the robot system 1000 includes the robot 1 including the hand 2 and the robot arm 10. The robot system 1000 picks a workpiece W with the hand 2. In this example, the robot system 1000 picks one workpiece W from workpieces W that are bulk-loaded in a container 19. It should be noted that the robot system 1000 may pick a specific workpiece W that is placed alone.

The robot 1 is, for example, an industrial robot. The robot 1 moves the hand 2 by the robot arm 10. The hand 2 is a so-called end effector. The hand 2 holds a workpiece W.

The robot arm 10 moves in three dimensions. Specifically, the robot arm 10 performs actions including a translation motion of at least three degrees of freedom. In this example, the robot arm 10 is a vertical articulated robot arm. The robot arm 10 is supported by a base 13. The robot arm 10 includes links, joints connecting the links, and a servo motor that rotationally drives the joints.

Specifically, the robot arm 10 includes a first link 11a coupled to the base 13, a second link 11b coupled to the first link 11a, a third link 11c coupled to the second link 11b, a fourth link 11d coupled to the third link 11c, and a fifth link 11e coupled to the fourth link 11d.

Specifically, the base 13 and the first link 11a are coupled to each other through a first joint 12a rotatable about an axis extending in the vertical directions. The first link 11a and the second link 11b are coupled to each other through a second joint 12b rotatable about an axis extending in the horizontal directions. The second link 11b and the third link 11c are coupled to each other through a third joint 12c rotatable about an axis extending in the horizontal directions. The third link 11c and the fourth link 11d are coupled to each other through a fourth joint 12d rotatable about an axis of the fourth link 11d (i.e., directions in which the fourth link 11d extends). The fourth link 11d and the fifth link 11e are coupled to each other through a fifth joint 12e rotatable about an axis orthogonal to the axis of the fourth link 12d.

The robot arm 10 includes servo motors that rotationally drive the joints. Each of the servo motors includes an encoder.

The thus-configured robot arm 10 performs translation motions in directions of the three orthogonal axes and rotation motions about the three orthogonal axes.

The robot system 1000 may further include a camera 15 that acquires an image of the workpieces W. The camera 15 is fixedly located above the container 19. The camera 15 captures an image of the inside of the container 19 from above. The camera 15 acquires an image including workpieces W in the container 19.

The image herein is either a two-dimensional image or a three-dimensional image. The three-dimensional image may be point group data, an RGB-D image, an RGB image, a depth image, a voxel, or the like. In other words, the camera 15 may be a three-dimensional camera, that is, an RGB-D camera that outputs RGB-D images, a stereo camera that acquires RGB images, or a three-dimensional vision sensor that acquires point group data, or the like.

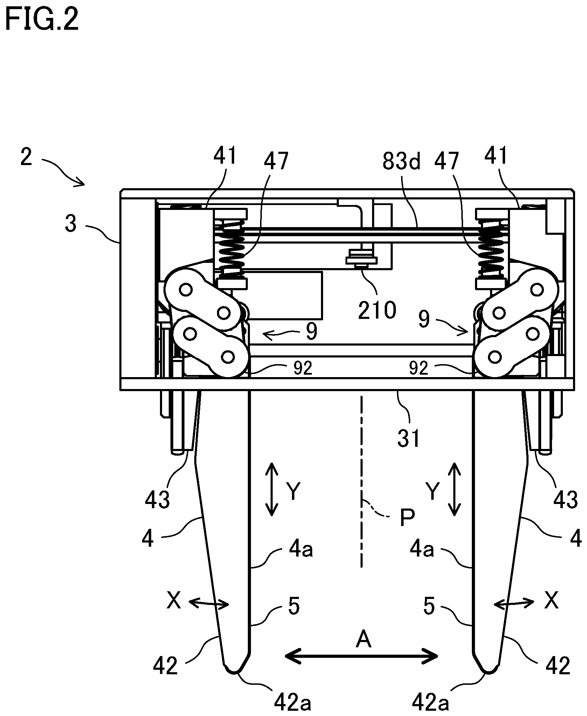

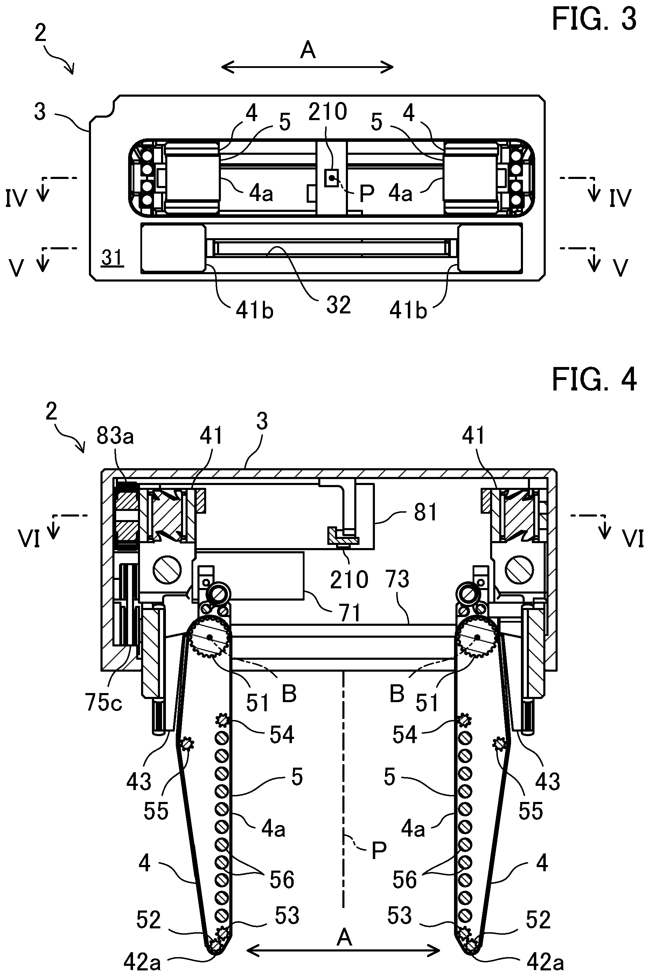

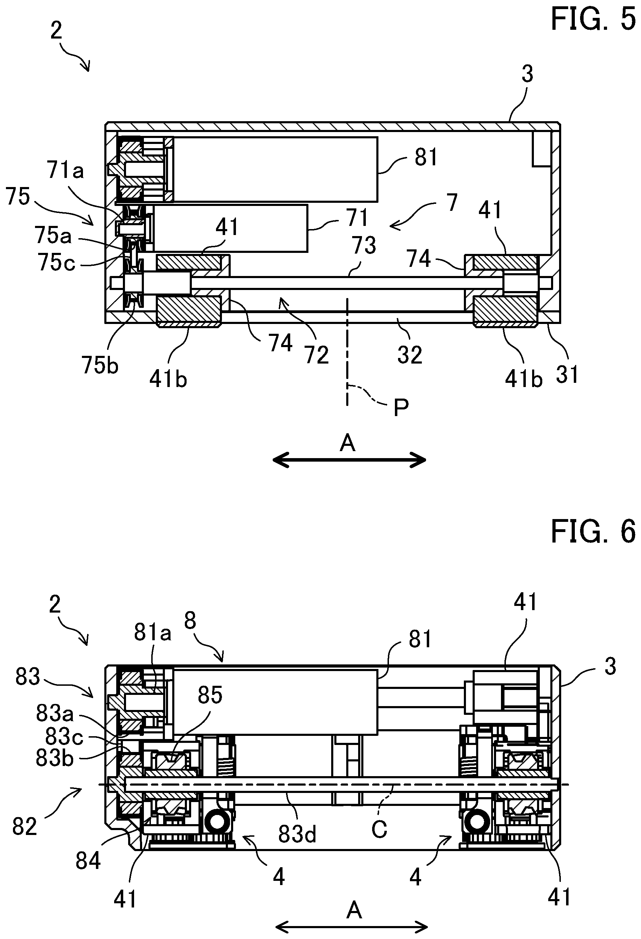

FIG. 2 is a front view of the hand 2. FIG. 3 is a bottom view of the hand 2. FIG. 4 is a cross-sectional view of the hand 2 taken along line IV-IV in FIG. 3. FIG. 5 is a cross-sectional view of the hand 2 taken along line V-V in FIG. 3. FIG. 6 is a cross-sectional view of the hand 2 taken along line VI-VI in FIG. 4. In FIG. 2, the front wall of a hand body 3 is not shown.

The hand 2 includes the hand body 3 and fingers 4 that is located on the hand body 3 and open and close. In this example, the hand 2 includes two fingers 4. The hand 2 has a predetermined reference axis P. As illustrated in FIG. 2, each of the fingers 4 extends in the direction of the reference axis P from the hand body 3. The fingers 4 open and close in opening/closing directions A orthogonal to the reference axis P. The reference axis P is located at the center of the fingers 4 in the opening/closing directions A. That is, in a fully closed state of the fingers 4, the fingers 4 are in contact with each other on the reference axis P.

Each of the fingers 4 has an endless belt 5 that comes into contact with the workpiece W. The endless belt 5 is wound around at least the distal end of the finger 4 and is rotationally driven. Each finger 4 has an inner surface 4a facing the other finger 4. The inner surface 4a is formed by the endless belt 5. A portion of the endless belt 5 corresponding to the inner surface 4a extends along the longitudinal directions of the finger 4. A portion of the endless belt 5 of one finger 4 and a portion of the endless belt 5 of the other finger 4 face each other in the opening/closing directions A. In the opening/closing directions A, a side at which the fingers 4 open is referred to as the "opening side," and the side at which the fingers 4 close is referred to as the "closing side."

As illustrated in FIG. 5, the hand 2 includes an opening/closing actuator 7 that opens and closes the fingers 4 in the opening/closing directions A. The fingers 4 move toward or away from each other in the opening/closing directions A by the opening/closing actuator 7. Accordingly, the fingers 4 hold the workpiece W and release holding of the workpiece W. In this example, the opening/closing actuator 7 moves two fingers 4. That is, the hand 2 includes the common opening/closing actuator 7 for the two fingers 4.

As illustrated in FIG. 6, the hand 2 includes a rotation actuator 8 that rotates the endless belt 5. The endless belt 5 is rotationally driven by the rotation actuator 8. At this time, a portion of the endless belt 5 corresponding to the inner surface 4a moves in the longitudinal directions of the finger 4. The hand 2 draws the workpiece W into a space between the fingers 4 or feeds the workpiece W out of the space between the fingers 4 by rotating the endless belts 5 of the fingers 4.

The hand 2 holds the workpiece W in multiples manners. In one manner, the hand 2 brings the distal ends of the fingers 4 into contact with the workpiece W and draws the workpieces W into a space between the fingers 4 using the endless belts 5. In another manner, the hand 2 holds the workpiece W by opening and closing the fingers 4 in the opening/closing directions A. As illustrated in FIG. 3, the hand 2 further includes a sensor 210 that detects drawing of the workpiece W into the space between the fingers 4.

### =Flexibility of Fingers=

As illustrated in FIG. 2, the fingers 4 are elastically displaceable in first directions X in which the fingers 4 open and close. Further, the fingers 4 are elastically displaceable in second directions Y in which the fingers 4 advance and retract with respect to the hand body 3. The first directions X are substantially the same as the opening/closing directions A. In this example, the fingers 4 elastically displace in the first directions X independently of each other. The second directions Y are the same as the direction of the reference axis P, in other words, are the same as the extension direction in which the fingers 4 extend from the hand body 3. The second directions Y are directions intersecting the opening/closing directions A, specifically, orthogonal to the opening/closing directions A. In the second directions Y, a side to which the fingers 4 advance from the hand body 3 will be hereinafter referred to simply as an "advancing side," and a side to which the fingers 4 retract toward the hand body 3 will be hereinafter referred to simply as a "retracting side." In this example, the fingers 4 elastically displace in the second directions Y independently of each other.

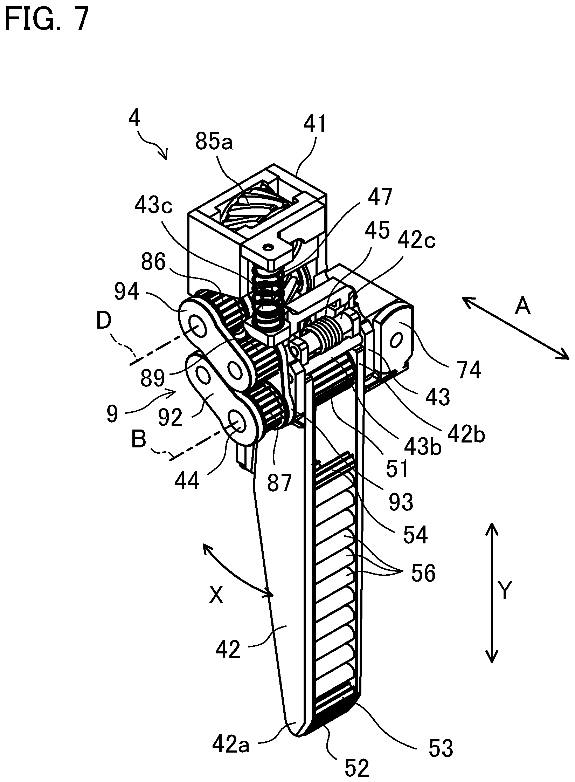

FIG. 7 is a perspective view of the finger 4. In FIG. 7, the endless belt 5 is omitted. Each finger 4 includes a base 41 supported by the hand body 3, and a finger body 42 supported by the base 41 to be elastically displaceable in the first directions X and elastically displaceable in the second directions Y. The base 41 is supported by the hand body 3 to be movable in the opening/closing directions A (see FIGS. 2 and 5). Specifically, the base 41 is supported by the hand body 3 via a feed screw 72 of the opening/closing actuator 7 described later. The finger body 42 is supported by the base 41 to be swingable about a predetermined swing axis B. The swing axis B is orthogonal to both the opening/closing directions A and the second directions Y. The finger body 42 displaces in the first directions X by swinging about the swing axis B. That is, the first directions X are circumferential directions about the swing axis B.

As illustrated in FIG. 7, the finger body 42 has an elongated shape. One end of the finger body 42 in the longitudinal direction will be hereinafter referred to as a first end 42a, and the other end of the finger body 42 in the longitudinal direction will be hereinafter referred to as a second end 42b. The first end 42a is the end that is away from the hand body 3 and is the distal end of the finger body 42.

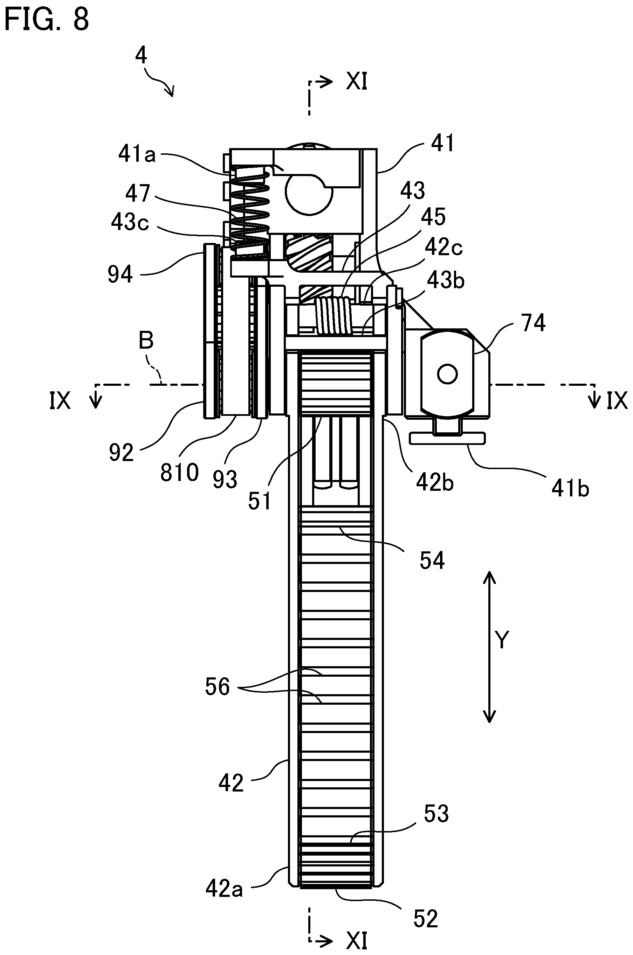

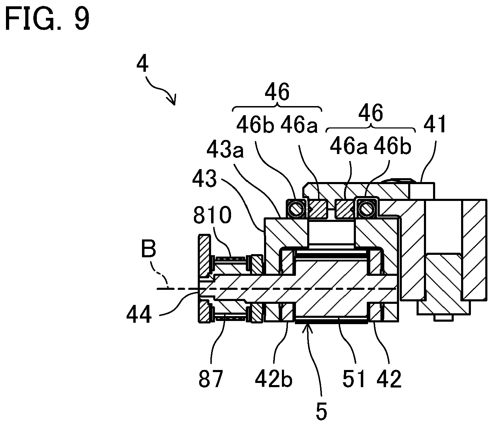

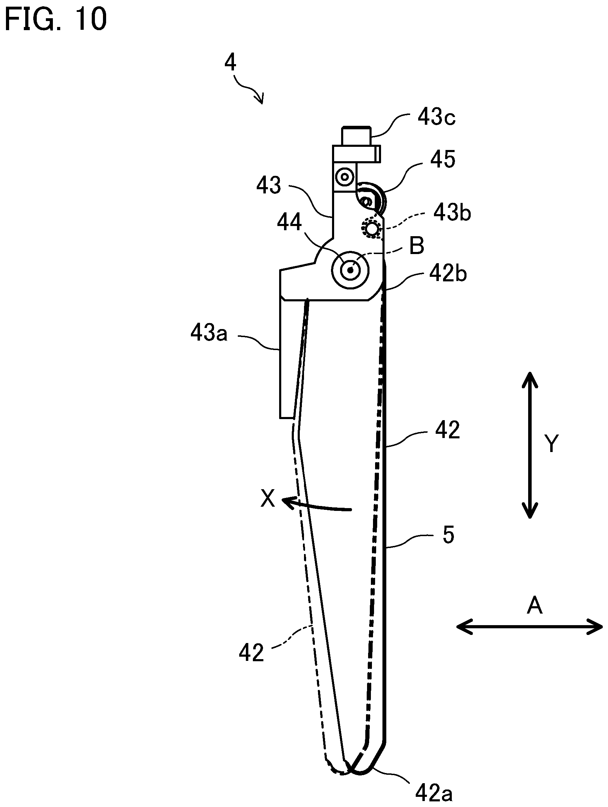

More specifically, the finger 4 includes a support 43 that supports the finger body 42 with respect to the base 41. That is, the finger body 42 is supported by the base 41 via the support 43. FIG. 8 is a side view of the finger 4. FIG. 9 is a cross-sectional view of the finger 4 taken along line IX-IX in FIG. 8. FIG. 10 is a front view of the finger body 42 and the support 43. In FIG. 8, the endless belt 5 is omitted.

As illustrated in FIG. 9, the support 43 supports the support shaft 44 such that the support shaft 44 is rotatable about the axis of the support shaft 44 via a bearing. The axis of the support shaft 44 is the swing axis B. The support shaft 44 supports the finger body 42 such that the finger body 42 is rotatable about the swing axis B via the bearing. That is, the support 43 supports the finger body 42 such that the finger body 42 is swingable about the swing axis B via the support shaft 44. The support shaft 44 supports the second end 42b of the finger body 42.

As illustrated in FIG. 10, the support 43 supports the finger body 42 such that the finger body 42 hangs from the support 43. The longitudinal direction of the finger body 42 hanging from the support 43 coincides with the second directions Y. The finger body 42 swings in the first directions X about the swing axis B from this state. Consequently, the finger body 42 displaces in the directions to move toward and away from the other finger body 42, that is, in the directions in which the finger 4 opens and closes.

As illustrated in FIG. 10, the support 43 includes a first stopper 43a and a second stopper 43b that restrict swing of the finger body 42. The first stopper 43a is located on the side of the finger body 42 at which the finger 4 opens. The first stopper 43a has an elongated plate shape. As indicated by the chain double-dashed line in FIG. 10, when the finger body 42 is displaced toward the opening side of the finger 4, the finger body 42 contacts the first stopper 43a to thereby restrict displacement of the finger body 42 on the opening side of the finger 4.

The second stopper 43b is located on the finger body 42 at the closing side of the finger 4. The second stopper 43b is a shaft extending parallel to the swing axis B (see FIG. 7). When the finger body 42 displaces toward the closing side of the finger 4, the finger body 42 contacts the second stopper 43b to thereby restrict displacement of the finger body 42 to the closing side of the finger 4.

The swing range of the finger body 42 is restricted by these first stopper 43a and second stopper 43b. The finger body 42 swings only in a relatively small range from a state where the finger body 42 extends in the second directions Y, and thus, the first directions X substantially coincide with the opening/closing directions A.

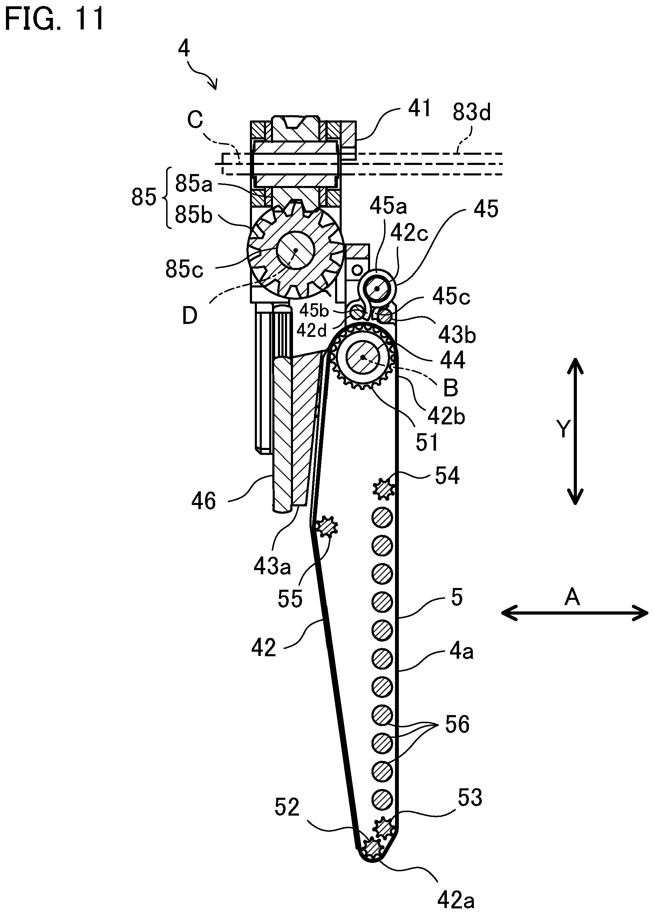

FIG. 11 is a cross-sectional view of the finger 4 taken along line XI-XI in FIG. 8. The hand 2 further includes a torsion spring 45 that biases the finger body 42 toward the closing side of the finger 4 in the first directions X. The axis of the torsion spring 45 is located at a position that is eccentric from the swing axis B. The torsion spring 45 includes a coil 45a, a first arm 45b, and a second arm 45c.

The torsion spring 45 is located in the finger body 42. The finger body 42 includes a support shaft 42c that supports the coil 45a of the torsion spring 45 and a contact shaft 42d that is in contact with the first arm 45b of the torsion spring 45. The support shaft 42c and the contact shaft 42d are located near the second stopper 43b and extend parallel to the swing axis B. The support shaft 42c is inserted into the coil 45a of the torsion spring 45. The second arm 45c of the torsion spring 45 is in contact with the second stopper 43b. The torsion spring 45 biases the contact shaft 42d and the second stopper 43b in directions in which the contact shaft 42d and the second stopper 43b move away from each other. More specifically, the support shaft 42c, the contact shaft 42d, and the second stopper 43b are arranged on the opposite side of the first end 42a of the finger body 42 with respect to the swing axis B. The contact shaft 42d is located on the closing side of the finger 4 with respect to the second stopper 43b in the circumferential directions about the swing axis B. That is, in the circumferential directions about the swing axis B, the direction in which the contact shaft 42d moves away from the second stopper 43b is the direction in which the finger body 42 swings toward the closing side of the finger 4. As a result, a biasing force of the torsion spring 45 exerts a moment on the finger body 42 toward the closing side of the finger 4 about the swing axis B.

In a state where no external force is exerted on the finger body 42 (i.e., in a normal state), the finger body 42 is separated from the first stopper 43a and in contact with the second stopper 43b by the biasing force of the torsion spring 45. That is, the finger body 42 in the normal state is elastically displaceable toward the opening side of the finger 4.

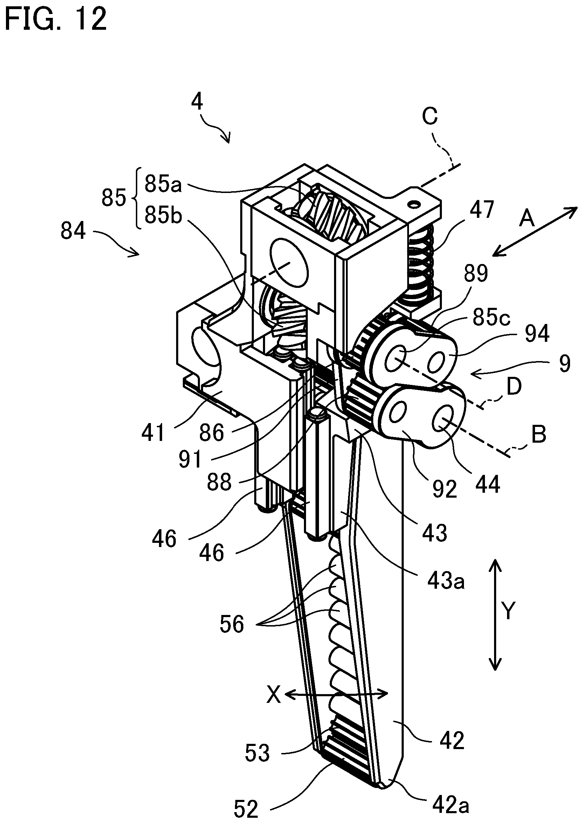

FIG. 12 is a perspective view of the finger 4 from an angle different from that in FIG. 7. In FIG. 12, the endless belt 5 is omitted. The support 43 is coupled to the base 41 to be displaceable in the second directions Y. The support 43 is coupled to the base 41 via a pair of linear guides 46. The linear guides 46 guide the support 43 in the second directions Y.

As illustrated in FIG. 9, each of the linear guides 46 includes a first rail 46a, a second rail 46b, and balls or rollers located between first rail 46a and the second rail 46b. The first rail 46a and the second rail 46b are movable relative to each other in the second directions Y. The first rail 46a is attached to the base 41, and the second rail 46b is attached to the support 43. Specifically, the second rail 46b is attached to the first stopper 43a.

As the support 43 moves in the second directions Y with respect to the base 41 via the linear guides 46, the finger body 42 supported by the support 43 also moves in the second directions Y with respect to the base 41.

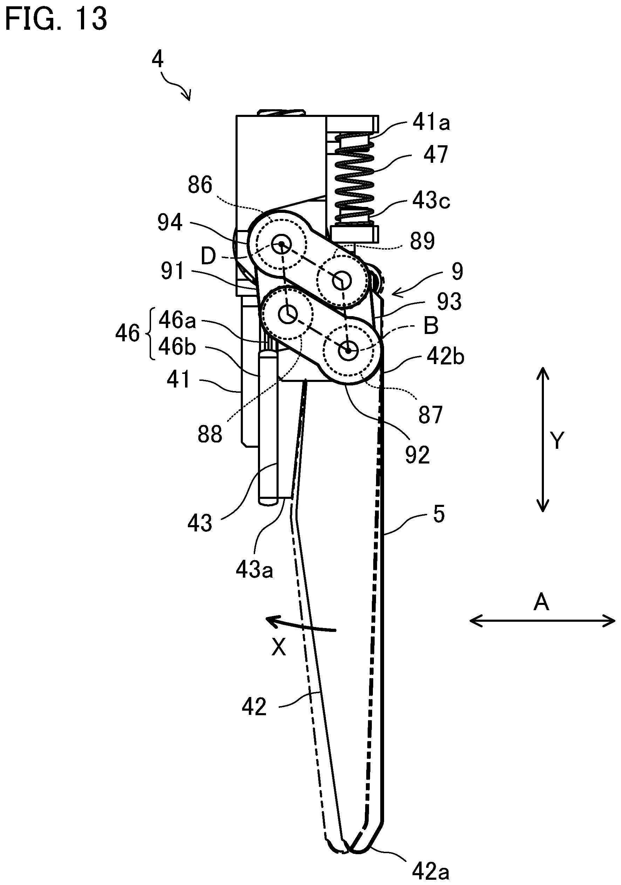

FIG. 13 is a front view of the finger 4. As illustrated in FIG. 13, the support 43 is biased by a spring 47 to the advancing side in the second directions Y. For example, the spring 47 is a coil spring. The support 43 includes a pin 43c projecting to the retracting side in the second directions Y. On the other hand, the base 41 includes a pin 41a projecting to the advancing side in the second directions Y at a position corresponding to the pin 43c. One end of the spring 47 is attached to the pin 41a, and the other end of the spring 47 is attached to the pin 43c. At this time, the spring 47 is compressed. An elastic force of the spring 47 is oriented in the second directions Y. The spring 47 biases the pins 41a and 43c in the directions in which the pins 41a and 43c move away from each other. That is, the spring 47 biases the support 43 to the advancing side in the second directions Y with respect to the base 41.

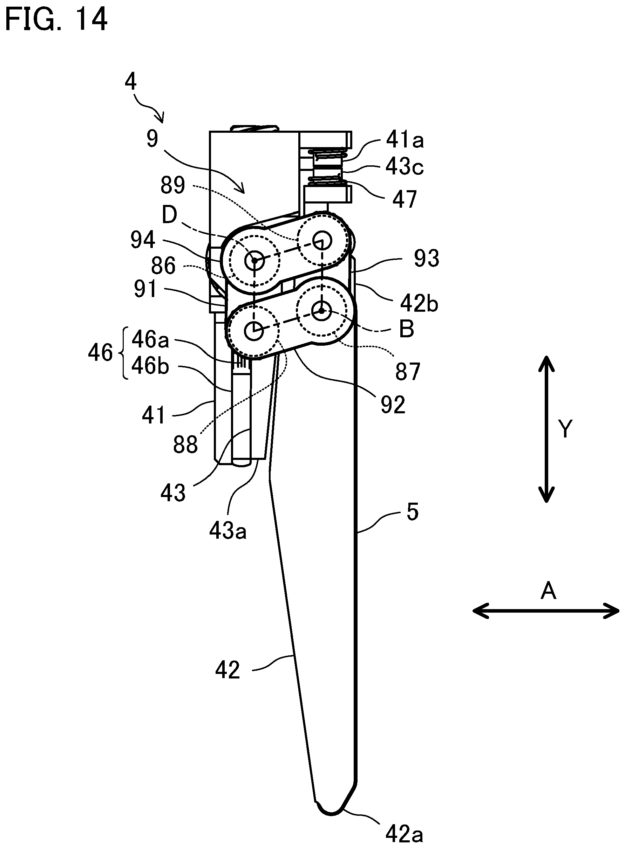

Consequently, the finger body 42 is biased by the spring 47 to the advancing side in the second directions Y with respect to the base 41. The finger body 42 is displaceable to the retracting side in the second directions Y against an elastic force of the spring 47. FIG. 14 is a front view of the finger 4 in a state where the finger body 42 is displaced to the retracting side in the second directions Y. In FIG. 14, the spring 47 is partially broken. The finger body 42 can be displaced to the retracting side in the second directions Y to a position at which the pins 41a and 43c are in contact with each other. That is, the pins 41a and 43c function as stoppers that restrict movement of the finger body 42 in the second directions Y.

As will be described later, movement of the finger body 42 to the advancing side in the second directions Y is restricted by the hand body 3, by contact of a linkage 9 of the finger 4 with the hand body 3.

In the manner described above, the support 43 is supported by the base 41 to be elastically displaceable in the second directions Y. Consequently, the finger body 42 is supported by the base 41 via the support 43 to be elastically displaceable in the second directions Y. The finger body 42 is also supported by the support 43 to be elastically displaceable in the first directions X. In other words, the finger body 42 is supported by the base 41 via the support 43 to be elastically displaceable in the first directions X. In this example, when the support 43 moves in the second directions Y, the swing axis B also moves in the second directions Y.

### =Finger with Belt=

As illustrated in FIG. 11, each of the fingers 4 includes a first pulley 51 that is rotationally driven, a second pulley 52 located at the distal end of the finger 4, and a third pulley 53 located between the first pulley 51 and the second pulley 52. The endless belt 5 is wound around the first pulley 51, the second pulley 52, and the third pulley 53. The first pulley 51 is a driving pulley, and the second pulley 52 and the third pulley 53 are driven pulleys.

The finger body 42 supports each of the first pulley 51, the second pulley 52, and the third pulley 53 such that these pulleys are rotatable about parallel rotation axes. Specifically, as illustrated in FIG. 9, the first pulley 51 is rotatably supported by the finger body 42 via the support shaft 44. The first pulley 51 is non-rotatable with respect to the support shaft 44. The support shaft 44 supports the finger body 42 to be rotatable about the axis thereof, that is, about the swing axis B. Consequently, the first pulley 51 is rotatable about the swing axis B relative to the finger body 42. The second pulley 52 and the third pulley 53 are also rotatably supported by the finger body 42 via the shaft.

As illustrated in FIG. 11, the third pulley 53 is located near the distal end of the finger 4, that is, near the second pulley 52. The third pulley 53 is located on the closing side in the opening/closing directions A with respect to the second pulley 52. That is, as illustrated in FIG. 4, the interval between the third pulleys 53 of the fingers 4 is narrower than the interval between the second pulleys 52 of the fingers 4.

In this example, as illustrated in FIG. 11, each finger 4 further includes a fourth pulley 54 and a fifth pulley 55. The finger body 42 rotatably supports each of the fourth pulley 54 and the fifth pulley 55. The fourth pulley 54 and the fifth pulley 55 are driven pulleys. The rotation axes of the fourth pulley 54 and the fifth pulley 55 are parallel to the rotation axis of the first pulley 51 and others. The fourth pulley 54 is located between the first pulley 51 and the third pulley 53. The fourth pulley 54 is located closer to the first pulley 51 than to the third pulley 53. The fifth pulley 55 is located between the first pulley 51 and the second pulley 52. However, the fifth pulley 55 is located on the opening side in the opening/closing directions A with respect to the first pulley 51 and the second pulley 52.

The endless belt 5 is located on the finger body 42. The endless belt 5 is wound around the first pulley 51, the second pulley 52, the third pulley 53, the fourth pulley 54, and the fifth pulley 55 from the outer side. That is, the first pulley 51, the second pulley 52, the third pulley 53, the fourth pulley 54, and the fifth pulley 55 are arranged on the inner side of the endless belt 5. The endless belt 5 is a toothed belt, that is, a timing belt. The first pulley 51 and the second pulley 52 are toothed pulleys, that is, timing pulleys. The third pulley 53, the fourth pulley 54, and the fifth pulley 55 are toothed pulleys and function as toothed idlers. The teeth of the endless belt 5 engage with the teeth of the first pulley 51 and others.

A portion of the endless belt 5 between the first pulley 51 and the second pulley 52 that passes through the third pulley 53 and the fourth pulley 54 is the inner surface 4a of the finger 4. In the normal state, that is, in the state where no external force is exerted on the finger body 42 in the first directions X, a portion of the endless belt 5 corresponding to the inner surface 4a extends in the second directions Y and faces the closed side in the opening/closing directions A. That is, a portion of the endless belt 5 of one finger 4 corresponding to the inner surface 4a and a portion of the endless belt 5 of the other finger 4 corresponding to the inner surface 4a face each other, as illustrated in FIG. 4. Strictly speaking, the portion of the endless belt 5 of one finger 4 corresponding to the inner surface 4a and the portion of the endless belt 5 of the other finger 4 corresponding to the inner surface 4a are tilted such that the interval between the two portions narrows toward the distal ends.

A portion of the endless belt 5 between the second pulley 52 and the third pulley 53 is tilted with respect to a portion of the endless belt 5 between the third pulley 53 and the fourth pulley 54. Specifically, the portion of the endless belt 5 between the second pulley 52 and the third pulley 53 is tilted to be located on the opening side in the opening/closing directions A as approaching the distal end of the finger 4. That is, the distal end portion of the inner surface 4a of the finger 4 is tilted to open to the opening side in the opening/closing directions A. Accordingly, the interval between the fingers 4 at the distal ends of the fingers 4 expands toward the distal ends of the fingers 4.

As illustrated in FIG. 11, the finger 4 further includes rollers 56. The finger body 42 supports the rollers 56 such that the rollers are rotatable about parallel rotation axes. The rotation axes of the rollers 56 are parallel to the rotation axes of the first pulley 51 and others. The rollers 56 are located on the inner side of the endless belt 5. The rollers 56 are arranged along the portion of the endless belt 5 between the third pulley 53 and the fourth pulley 54. The rollers 56 are close to the endless belt 5. Specifically, each roller 56 has a gap between the roller 56 and the endless belt 5.

The endless belt 5 rotates by rotationally driving the first pulley 51. When the endless belt 5 rotates, the portion of the endless belt 5 corresponding to the inner surface 4a moves in the second directions Y. At this time, whether the portion of the endless belt 5 corresponding to the inner surface 4a moves toward the first end 42a or the second end 42b of the finger body 42 in the second directions Y depends on the direction of rotation of the first pulley 51. Rotation in the case where the portion corresponding to the inner surface 4a moves toward the first end 42a will be hereinafter referred to as "rotation toward the feeding side," while rotation in the case where the portion corresponding to the inner surface 4a moves toward the second end 42b will be hereinafter referred to as "rotation toward the drawing side."

### =Opening/closing Actuator=

As illustrated in FIG. 5, the opening/closing actuator 7 includes a first motor 71, a feed screw 72 to which the finger 4 is coupled, and a transfer 75 that transfers a rotation driving force of the first motor 71 to the feed screw 72. The opening/closing actuator 7 is located in the hand body 3.

The first motor 71 is, for example, a servo motor. A driver of the first motor 71 includes a current sensor. The first motor 71 is attached to the hand body 3 such that an output shaft 71a is parallel to the opening/closing directions A.

The feed screw 72 includes a screw 73 and nuts 74. In this example, the feed screw 72 includes two nuts 74. The screw 73 extends in the opening/closing directions A. The screw 73 is supported by the hand body 3 via a bearing to be rotatable about an axis extending in the opening/closing directions A. The screw 73 is a so-called left-hand and right-hand screw. The screw 73 includes a right-hand thread portion and a left-hand thread portion that are coaxially arranged.

Each nut 74 is screwed to the screw 73. One nut 74 is coupled to each finger 4. The nut 74 is fixed to the base 41 of the finger 4. The nut 74 is screwed onto the screw 73 so that the base 41 is thereby supported by the feed screw 72 to be movable in the opening/closing directions A. One nut 74 is screwed onto the right-hand thread portion of the screw 73, while the other nut 74 is screwed onto the left-hand thread portion of the screw 73.

In addition, rotation of the base 41 about the axis of the screw 73 is prevented by the hand body 3. Specifically, in a state where the base 41 is supported by the feed screw 72, the base 41 is located near a bottom plate 31 of the hand body 3, as illustrated in FIG. 5. The bottom plate 31 includes a slit 32 extending in the opening/closing directions A. The base 41 is fitted into the slit 32. As illustrated in FIG. 8, a retainer 41b is attached to the base 41 to prevent the base 41 from coming out of the slit 32. As illustrated in FIG. 3, the retainer 41b is exposed to the outside of the hand body 3. The base 41 is fitted into the slit 32, and thus, cannot rotate about the axis of the screw 73.

As illustrated in FIG. 5, the transfer 75 includes a first pulley 75a attached to the output shaft 71a of the first motor 71, a second pulley 75b attached to the screw 73, and a timing belt 75c wound around the first pulley 75a and the second pulley 75b. The first pulley 75a and the second pulley 75b are toothed pulleys, that is, timing pulleys. The timing belt 75c is a toothed belt. The first pulley 75a is non-rotatably attached to the output shaft 71a of the first motor 71. The second pulley 75b is non-rotatably attached to the screw 73. A rotation driving force of the first motor 71 is transferred from the first pulley 75a to the second pulley 75b via the timing belt 75c.

When the first motor 71 is operated, the screw 73 rotates integrally with the second pulley 75b. Since the base 41 fixed to the nut 74 is fitted in the slit 32 of the hand body 3, even when the screw 73 rotates, the nut 74 and the base 41 do not rotate. The nut 74 and the base 4 move in the axial directions of the screw 73 with rotation of the screw 73, and consequently, the finger 4 moves in the opening/closing directions A.

The nut 74 of one finger 4 is screwed onto the right-hand thread portion of the screw 73, while the nut 74 of the other finger 4 is screwed onto the left-hand thread portion of the screw 73. Accordingly, when the screw 73 rotates, the two fingers 4 move either toward each other in the opening/closing directions A (i.e., close) or away from each other in the opening/closing directions A (i.e., open). Whether the two fingers 4 open or close is switched depending on the direction of rotation of the screw 73, that is, the direction of rotation of the first motor 71.

### =Rotation Actuator=

As illustrated in FIG. 6, the rotation actuator 8 includes a second motor 81 that outputs a rotation driving force for the endless belt 5, and a transfer 82 that transfers the rotation driving force of the second motor 81 to the first pulley 51. The second motor 81 is, for example, a servo motor. A driver of the second motor 81 includes a current sensor. The second motor 81 is attached to the hand body 3 such that the output shaft 81a is parallel to the opening/closing directions A.

The transfer 82 includes a first transfer 83 located in the hand body 3 and a second transfer 84 located in the finger 4.

The first transfer 83 includes a first pulley 83a, a second pulley 83b, a timing belt 83c wound around the first pulley 83a and the second pulley 83b, and a spline shaft 83d to which the second pulley 83b is coupled. The first pulley 83a and the second pulley 83b are toothed pulleys, that is, timing pulleys. The timing belt 83c is a toothed belt. The first transfer 83 transfers a rotation driving force of the second motor 81 to the spline shaft 83d.

The first pulley 83a is non-rotatably coupled to the output shaft 81a. The spline shaft 83d includes an axis C extending parallel to the opening/closing directions A. The spline shaft 83d is supported by the hand body 3 to be rotatable about the axis C. The second pulley 83b is coupled to the spline shaft 83d to be non-rotatable about the axis C.

As illustrated in FIG. 12, the second transfer 84 includes a screw gear 85 located in the base 41, a first transfer pulley 86 located in the base 41, a second transfer pulley 87 located in the finger body 42 (see FIG. 7), a transmission belt 810 wound around the first transfer pulley 86 and the second transfer pulley 87 (see FIG. 8), a first idle pulley 88 that applies tension to the transmission belt 810, a second idle pulley 89 that applies tension to the transmission belt 810, and a linkage 9 coupled to both the base 41 and the finger body 42 and supporting the first idle pulley 88 and the second idle pulley 89. The second transfer 84 transfers rotation of the spline shaft 83d to the first pulley 51 of the finger 4.

As illustrated in FIG. 11, the screw gear 85 includes a first gear 85a and a second gear 85b that meshes with the first gear 85a. The first gear 85a is supported by the base 41 of the finger 4 to be rotatable about the axis C and immovable in the directions of the axis C. Specifically, the first gear 85a is coupled to the spline shaft 83d to be non-rotatable about the axis C and movable in the directions of the axis C. The second gear 85b is supported by the base 41 to be rotatable about an axis D. The axis D is located at a skew position with respect to the axis C. The axis D is parallel to the rotation axis of the first pulley 51, that is, the swing axis B. Specifically, the base 41 rotatably supports the shaft 85c using the axis D of the shaft 85c as the rotation axis. The second gear 85b is supported by the shaft 85c to be non-rotatable about the axis D. That is, the second gear 85b is rotatably supported by the base 41 about the axis D via the shaft 85c.

When the spline shaft 83d rotates about the axis C, the first gear 85a rotates about the axis C together with the spline shaft 83d. At this time, the base 41 does not rotate about the axis C. When the first gear 85a rotates, the second gear 85b rotates about the axis D.

As illustrated in FIG. 12, the first transfer pulley 86 is supported by the base 41 to be rotatable about the axis D. Specifically, the first transfer pulley 86 is supported by the shaft 85c to be non-rotatable about the axis D. The first transfer pulley 86 is located coaxially with the second gear 85b and rotates about the axis D together with the second gear 85b.

As illustrated in FIG. 9, the second transfer pulley 87 is supported by the support shaft 44 to be non-rotatable about the axis thereof. The support shaft 44 supports the first pulley 51 such that the first pulley 51 is non-rotatable about the axis thereof, and supports the finger body 42 such that the finger body 42 is rotatable about the axis thereof, as described above. That is, the second transfer pulley 87 is supported by the finger body 42 via the support shaft 44 to be rotatable about the axis of the support shaft 44, that is, about the swing axis B. The second transfer pulley 87 is located coaxially with the first pulley 51 and rotates about the swing axis B together with the first pulley 51. The rotation axis of the second transfer pulley 87 is parallel to the rotation axis of the first transfer pulley 86.

Each of the first idle pulley 88 and the second idle pulley 89 is rotatably supported by the linkage 9 about a rotation axis parallel to the rotation axes of the first transfer pulley 86 and the second transfer pulley 87, as illustrated in FIG. 12.

As illustrated in FIG. 13, the linkage 9 includes a first link 91, a second link 92, a third link 93, and a fourth link 94. The first link 91 rotatably supports the first idle pulley 88 and is coupled to the base 41 to be rotatable about the axis of the first transfer pulley 86, that is, about the axis D. The second link 92 rotatably supports the first idle pulley 88 and is coupled to the finger body 42 to be rotatable about the axis of the second transfer pulley 87, that is, about the swing axis B. The third link 93 rotatably supports the second idle pulley 89 and is coupled to the finger body 42 to be rotatable about the axis of the second transfer pulley 87, that is, about the swing axis B. The fourth link 94 rotatably supports the second idle pulley 89 and is coupled to the base 41 to be rotatable about the axis of the first transfer pulley 86, that is, about the axis D. That is, the first idle pulley 88 is supported by the first link 91 and the second link 92. The second idle pulley 89 is supported by the third link 93 and the fourth link 94. **In** other words, the first link 91 coupes the first transfer pulley 86 and the first idle pulley 88. The second link 92 couples the first idle pulley 88 and the second transfer pulley 87. The third linkage 93 couples the second transfer pulley 87 and the second idle pulley 89. The fourth linkage 94 couples the second idle pulley 89 and the first transfer pulley 86.

The first link 91 and the third link 93 are parallel. The second link 92 and the fourth link 94 are parallel. That is, the linkage 9 is a parallel linkage. **In** the parallelogram defined by the linkage 9, the first transfer pulley 86 and the second transfer pulley 87 are located at one diagonal position. The first idle pulley 88 and the second idle pulley 89 are located at the other diagonal position.

The first link 91, the second link 92, the third link 93, and the fourth link 94 are equilateral linkages. That is, the first link 91, the second link 92, the third link 93, and the fourth link 94 have the same length.

The diameters of the pitch circles of the first transfer pulley 86, the second transfer pulley 87, the first idle pulley 88, and the second idle pulley 89 are the same.

The transmission belt 810 is an endless belt. The transmission belt 810 is wound around the first transfer pulley 86, the second transfer pulley 87, the first idle pulley 88, and the second idle pulley 89 from the outer side. That is, the first transfer pulley 86, the second transfer pulley 87, the first idle pulley 88, and the second idle pulley 89 are arranged on the inner side of the transmission belt 810.

The transmission belt 810 is a toothed belt. The first transfer pulley 86 and the second transfer pulley 87 are toothed pulleys, that is, timing pulleys. The first idle pulley 88 and the second idle pulley 89 are toothed pulleys and function as toothed idlers. The teeth of the transmission belt 810 mesh with the teeth of the first transfer pulley 86 and others.

As described above, the finger body 42 is displaced relative to the base 41. For example, as illustrated in FIG. 14, the finger body 42 displaces in the second directions Y with respect to the base 41. The first transfer pulley 86 is located in the base 41, and the second transfer pulley 87 is located in the finger body 42. The relative positional relationship between the first transfer pulley 86 and the second transfer pulley 87 changes in accordance with displacement of the finger body 42 in the second directions Y. When the relative positional relationship between the first transfer pulley 86 and the second transfer pulley 87 changes, the linkage 9 deforms, causing the first idle pulley 88 and the second idle pulley 89 supported by the linkage 9 to displace. Even when the first idle pulley 88 and the second idle pulley 89 displace, the perimeter length of the quadrangle defined by the linkage 9 remains unchanged. That is, the first idle pulley 88 and the second idle pulley 89 displace in accordance with the linkage 9 to thereby continue to apply appropriate tension to the transmission belt 810. As a result, the transmission belt 810 properly transmits rotation of the first transfer pulley 86 to the second transfer pulley 87.

The finger body 42 also displaces in the first directions X with respect to the base 41. At this time, the finger body 42 swings about the swing axis B, that is, the axis of the support shaft 44. Since the first pulley 51 and the second transfer pulley 87 are supported by the support shaft 44, even when the finger body 42 swings about the swing axis B, the first pulley 51 and the second transfer pulley 87 do not displace. Consequently, the relative positional relationship between the first transfer pulley 86 and the second transfer pulley 87 does not change, and the linkage 9 does not deform, either. Accordingly, the transmission belt 810 appropriately transfers rotation of the first transfer pulley 86 to the second transfer pulley 87.

In the thus-configured rotation actuator 8, as illustrated in FIG. 6, when the second motor 81 is operated, the rotation driving force of the second motor 81 is transferred from the first pulley 83a to the second pulley 83b via the timing belt 83c, causing the spline shaft 83d to rotate about the axis C. When the spline shaft 83d rotates, the first gear 85a of the screw gear 85 rotates together with the spline shaft 83d. Accordingly, as illustrated in FIG. 12, the second gear 85b rotates, and the first transfer pulley 86 also rotates together with the second gear 85b. As illustrated in FIG. 9, rotation of the first transfer pulley 86 is transferred to the second transfer pulley 87 via the transmission belt 810, and the first pulley 51 rotates together with the second transfer pulley 87. Thus, the first pulley 51 is rotationally driven by the second motor 81, and consequently, the endless belt 5 rotates. The direction of rotation of the endless belt 5 is switched in accordance with the direction of rotation of the second motor 81.

Here, when the finger 4 moves in the opening/closing directions A, the second transfer 84 moves in the opening/closing directions A together with the finger 4. Specifically, the first gear 85a is movable in the directions of the axis C with respect to the spline shaft 83d. Since the axis C is parallel to the opening/closing directions A, the first gear 85a supported by the base 41 moves along the spline shaft 83d in accordance with movement of the finger 4 in the opening/closing directions A. Even when the finger 4 moves in the opening/closing directions A, the first gear 85a remains supported by the spline shaft 83d non-rotatably about the axis C. In other words, regardless of the position of the finger 4 in the opening/closing directions A, the rotation driving force of the second motor 81 is transferred to the first gear 85a via the spline shaft 83d.

As described above, the finger body 42 of the finger 4 displaces in the first directions X. At this time, the finger body 42 swings about the swing axis B, that is, the axis of the support shaft 44. The first pulley 51 and the second transfer pulley 87 are supported by the support shaft 44. Therefore, even when the finger body 42 swings about the swing axis B, the first pulley 51 and the second transfer pulley 87 do not displace. Consequently, even when the finger body 42 displaces in the first directions X, the rotation driving force of the second motor 81 is transferred to the second transfer pulley 87 via the transmission belt 810.

Further, the finger body 42 of the finger 4 displaces in the second directions Y, as described above. At this time, the finger body 42 displaces in the second directions Y relative to the base 41. The first transfer pulley 86 is located in the base 41, and the second transfer pulley 87 is located in the finger body 42. Thus, the relative positional relationship between the first transfer pulley 86 and the second transfer pulley 87 changes in accordance with displacement of the finger body 42 in the second directions Y. When the relative positional relationship between the first transfer pulley 86 and the second transfer pulley 87 changes, the first idle pulley 88 and the second idle pulley 89 supported by the linkage 9 displace. The first idle pulley 88 and the second idle pulley 89 displace in accordance with the linkage 9 to thereby continue to apply appropriate tension to the transmission belt 810. As a result, the transmission belt 810 appropriately transfers rotation of the first transfer pulley 86 to the second transfer pulley 87.

In short, regardless of movement of the finger 4 in the opening/closing directions A, displacement of the finger body 42 in the first directions X, and displacement of the finger body 42 in the second directions Y, the endless belt 5 is rotationally driven by the second motor 81.

As illustrated in FIG. 2, the linkage 9 is located in the hand body 3. The fourth link 94 is located near a bottom plate 31 of the hand body 3. The finger body 42 is biased by the spring 47 to the advancing side in the second directions Y with respect to the base 41. When the finger body 42 moves to the advancing side in the second directions Y, the fourth linkage 94 moves to the advancing side in the second directions Y together with the finger body 42. Eventually, the second link 92 and the third link 93 are brought into contact with the bottom plate 31. That is, movement of the finger body 42 to the advancing side in the second directions Y is restricted by contact of the second link 92 and the third link 93 with the bottom plate 31. Alternatively, movement of the finger body 42 to the advancing side in the second directions Y may also be restricted by contact between the second linkage 92 and the fourth linkage 94.

### =Sensor=

The sensor 210 detects drawing of the workpiece W into a space between the fingers 4. For example, as illustrated in FIG. 2, the sensor 210 is included in the hand body 3 and located between the fingers 4. More specifically, as illustrated in FIG. 3, the sensor 210 is located at the center of the fingers 4 in the opening/closing directions A. The sensor 210 is a distance sensor. Specifically, the sensor 210 detects a distance to an object between the fingers 4. The sensor 210 detects drawing of the workpiece W into a space between the fingers 4. For example, the sensor 210 can be a time of flight (TOF) distance sensor.

### =Controller=

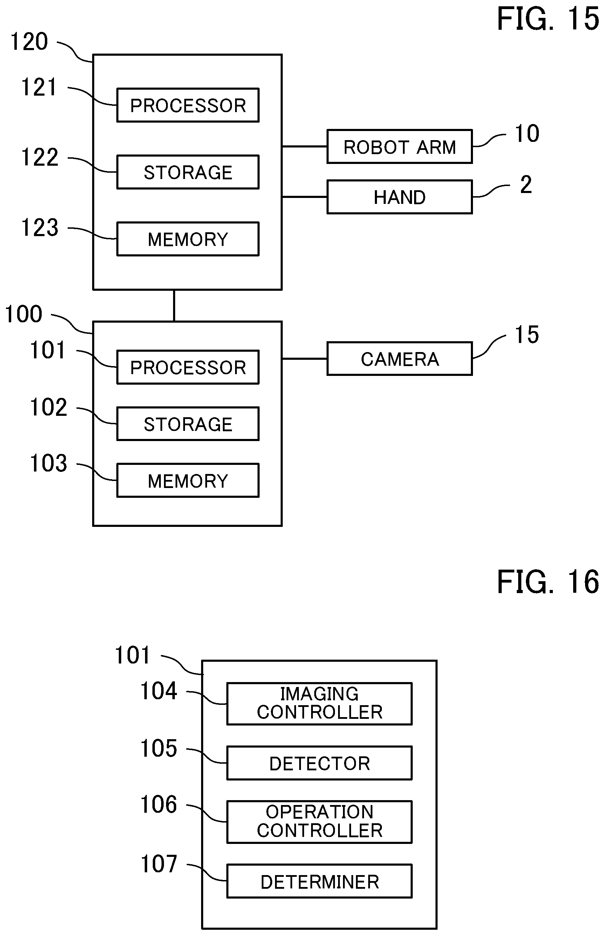

FIG. 15 illustrates a schematic hardware configuration of the controller 100. The controller 100 controls the hand 2 and the robot arm 10 and causes the hand 2 to perform various works such as picking work. The robot system 1000 further includes a robot controller 120. The controller 100 transmits and receives signals, information, and other data to/from the robot controller 120. The controller 100 controls the hand 2 and the robot arm 10 via the robot controller 120. The controller 100 outputs an instruction to the robot controller 120. The controller 100 transmits and receives signals, information, and other data to/from the camera 15. The robot controller 120 controls servo motors and other components of the robot arm 100 and the hand 2 in accordance with an instruction from the controller 100.

The controller 100 receives an image from the camera 15. The controller 100 detects workpieces W based on the image. In addition, the controller 100 generates a target path for the robot 1 based on the detected workpieces W and outputs an instruction corresponding to the generated target path to the robot controller 120.

The robot controller 120 includes a processor 121, a storage 122, and a memory 123.

The processor 121 controls the entire robot controller 120. The processor 121 performs various computation processes. For example, the processor 121 is a processor such as a central processing unit (CPU). The processor 121 may be a micro controller unit (MCU), a micro processor unit (MPU), a field programmable gate array (FPGA), a programmable logic controller (PLC), system LSI, or the like.

The storage 122 stores programs and various types of data to be executed by the processor 121. The storage 122 may be, for example, a nonvolatile memory, a hard disc drive (HDD), or a solid state drive (SSD). The memory 123 temporarily stores data or other information. For example, the memory 123 is a volatile memory.

The processor 121 controls the hand 2 and the robot arm 10 based on an instruction from the controller 100. Specifically, the processor 121 controls the servo motors of the robot arm 10 and the like. At this time, the processor 121 performs feedback control or feedforward control on the servo motor.

The controller 100 includes a processor 101, a storage 102, and a memory 103.

The processor 101 controls the entire controller 100. The processor 101 performs various computation processes. For example, the processor 101 is a processor such as a central processing unit (CPU). The processor 101 may be a micro controller unit (MCU), a micro processor unit (MPU), a field programmable gate array (FPGA), a programmable logic controller (PLC), system LSI, or the like.

The storage 102 stores various programs and various types of data to be executed by the processor 101. The storage 102 may be, for example, a nonvolatile memory, a hard disc drive (HDD), or a solid state drive (SSD). Various programs cause the controller 100 to perform various functions.

The memory 103 temporarily stores data or other information. For example, the memory 103 is a volatile memory. The memory 103 stores images from the camera 15.

The processor 101 causes the hand 2 and the robot arm 10 to perform a drawing action of bringing the distal ends of the fingers 4 into contact with a workpiece W to draw the workpiece W into a space between the fingers 4 using the endless belt 5. In the drawing action, the processor 101 causes the hand 2 and the robot arm 10 to perform a search action. The search action is an action that changes a relative position between the distal ends of the fingers 4 and the workpiece W in a state where the fingers 4 are open at a predetermined interval and the endless belt 5 is rotated. The change of the relative position between the distal ends of the fingers 4 and the workpiece W may include a change of relative position in any direction, as long as the positional relationship between the distal ends of the fingers 4 and the workpiece W changes.

FIG. 16 is a block diagram illustrating a configuration of a control system of the processor 101. The processor 101 reads programs from the storage 102 and develops the programs to the memory 103 to thereby perform various functions. Specifically, the processor 101 functions as an imaging controller 104 that causes the camera 15 to acquire an image, a detector 105 that detects workpieces W, an operation controller 106 to operate the hand 2 and the robot arm 10, and a determiner 107.

The imaging controller 104 controls the camera 15 and causes the camera 15 to acquire an image. The camera 15 acquires an image of the inside of the container 19. The imaging controller 104 stores images from the camera 15 in the memory 103.

The detector 105 detects the position of a workpiece W from the image. The image may include multiple workpieces W. The detector 105 detects a position of the workpieces W from the image through optional image processing. The detector 105 detects at least an approximate position of the workpieces W. The detector 105 may not detect the exact position of the workpieces W, orientation of the workpieces W, and others. In this example, since bulk-loaded workpieces W are targets, the detector 105 may detect an approximate position of a group of bulk-loaded workpieces W.

The operation controller 106 controls the robot arm 10 to move the hand 2 to a target position. Specifically, the operation controller 106 generates a target path of the robot arm 10 based on the detected position of the workpieces W. The operation controller 106 outputs an instruction in accordance with the target path to the robot controller 120. The robot controller 120 controls the servo motors based on the instruction as described above, thereby causing the robot arm 10 and hand 2 to move along the target path. In the drawing action, the operation controller 106 moves the hand 2 to a position where the distal ends of the fingers 4 are in contact with the workpiece W. In the search action, the operation controller 106 controls the robot arm 10 so that the relative position between the distal ends of the fingers 4 and the workpiece W changes.

Regarding control of the hand 2, the operation controller 106 controls opening and closing of the fingers 4 and rotation of the endless belt 5. Specifically, the operation controller 106 controls the first motor 71 and the second motor 81 via the robot controller 120. The operation controller 106 opens and closes the fingers 4 by controlling the first motor 71. The operation controller 106 adjusts the interval between the fingers 4 to a predetermined value by controlling the first motor 71. The operation controller 106 rotates the endless belt 5 by controlling the second motor 81. More specifically, the operation controller 106 switches between drawing and feeding of the workpiece W using the endless belt 5 by switching the direction of rotation of the second motor 81.

The determiner 107 determines drawing of the workpiece W into a space between the fingers 4 based on a detection result of the sensor 210. The determiner 107 determines that drawing of the workpiece W into the space between the fingers 4 is completed if the distance from the sensor 210 to the workpiece W is less than or equal to a predetermined threshold.

The determiner 107 may determine approach of the fingers 4 to the workpiece W based on the detection result of the sensor 210. For example, if the distance from the sensor 210 to the workpiece W reaches the predetermined threshold, the determiner 107 determines that the fingers 4 are in contact with the workpiece W. The threshold for determining contact of the fingers 4 is greater than the threshold for determining drawing of the workpiece W.

### =Robot Action=

Next, actions of the robot 1 will be described in detail. The robot 1 performs draw-in holding of holding the workpiece W by a drawing action of drawing the workpiece W into a space between the fingers 4 using the endless belt 5. In performing such draw-in holding, the controller 100 causes the hand 2 and the robot arm 10 to perform a search action. Specifically, the operation controller 106 brings the distal ends of the fingers 4 into contact with the workpiece W with the endless belt 5 rotated toward the drawing side, and then changes a relative position between the distal ends of the fingers 4 and the workpiece W. The change of the relative position includes not only a monotonous decrease or increase in the relative distance between the distal ends of the fingers 4 and the workpiece W, but also both decrease and increase in the relative distance. In this example, in the search action, the controller 100 causes the distal ends of the fingers 4 to move toward and away from a group of bulk-loaded workpieces W and brings the distal ends of the fingers 4 into contact with any of the workpieces W. Since the endless belt 5 is rotated toward the drawing side, when the workpiece W appropriately fits between the fingers 4 at the distal ends of the fingers 4, the workpiece W is drawn into the space between the fingers 4 by the endless belt 5.

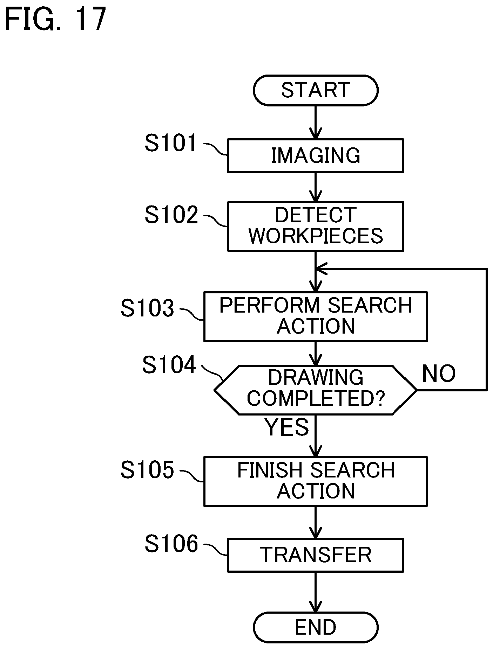

The draw-in holding of the robot 1 will be described in detail with reference to FIG. 17. FIG. 17 is a flowchart of a pick-and-place process.

First, in step S101, the imaging controller 104 acquires an image of the inside of the container 19. Specifically, the imaging controller 104 causes the camera 15 to acquire an image of the inside of the container 19.

In step S102, the detector 105 detects a position of workpieces W from the image of the inside of the container 19. For example, the detector 105 detects an approximate position of a group of bulk-loaded workpieces W.

Then, in step S103, the operation controller 106 starts a search action. Specifically, the operation controller 106 adjusts the opening degree of the fingers 4 and rotates the endless belt 5. The operation controller 106 changes the relative position between the distal ends of the fingers 4 and the workpiece W in this state.

The controller 100 adjusts the interval between the fingers 4 to an interval smaller than the size of a target workpiece W to be drawn. The interval between the fingers 4 that the controller 100 can adjust herein is an interval that can be controlled by the first motor 71 and is determined based on the interval between the bases 41. Since each finger 4 is displaceable in the first directions X, the interval between the fingers 4 can increase beyond the interval in control.

The controller 100 adjusts the interval between the fingers 4 to an interval smaller than the size of the target workpiece W to be drawn by a predetermined amount. For example, the size of the target workpiece W is the size of a portion of the target workpiece W that is easy to hold with the fingers 4. In a case where the target workpiece W is a bolt, for example, the size of the target workpiece W is the outer diameter of the screw of the bolt. In a case where the target workpiece W is a nut, for example, the size of the target workpiece W is the thickness of the nut. The predetermined amount is smaller than the maximum amount of increase of the interval between the fingers 4 enlarged by elastic displacement of the fingers 4 in the first directions X. That is, when the fingers 4 are elastically displaced in the first directions X, the interval between the fingers 4 is adjusted to an interval at which the target workpiece W to be drawn can enter a space between the fingers 4.

The change of the relative position between the distal ends of the fingers 4 and the workpiece W may include a change of a relative position in any direction, as long as the positional relationship between the distal ends of the fingers 4 and the workpiece W changes. For example, as the search action, the operation controller 106 reciprocates the hand 2 so that the distal ends of the fingers 4 repeatedly move toward and away from the workpiece W. For example, the operation controller 106 periodically repeats movement of the fingers 4 toward and away from the workpiece W. The direction of the reciprocating movement of the hand 2 can be in any direction.

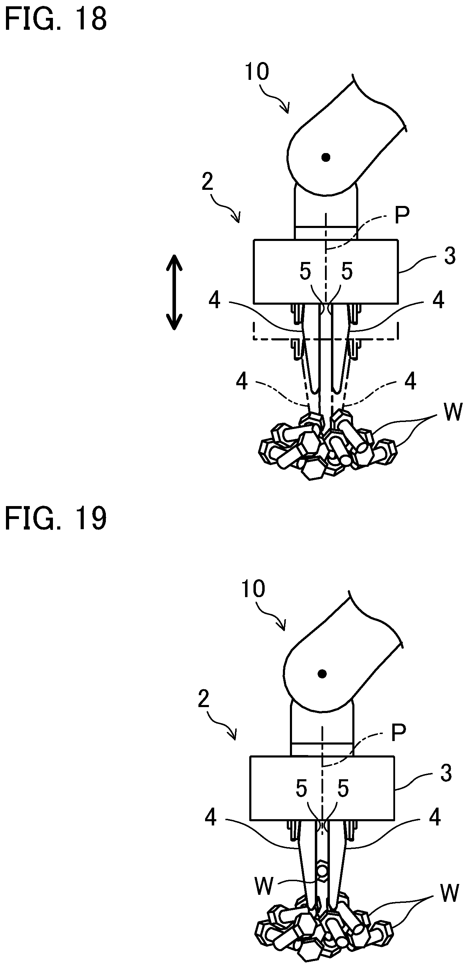

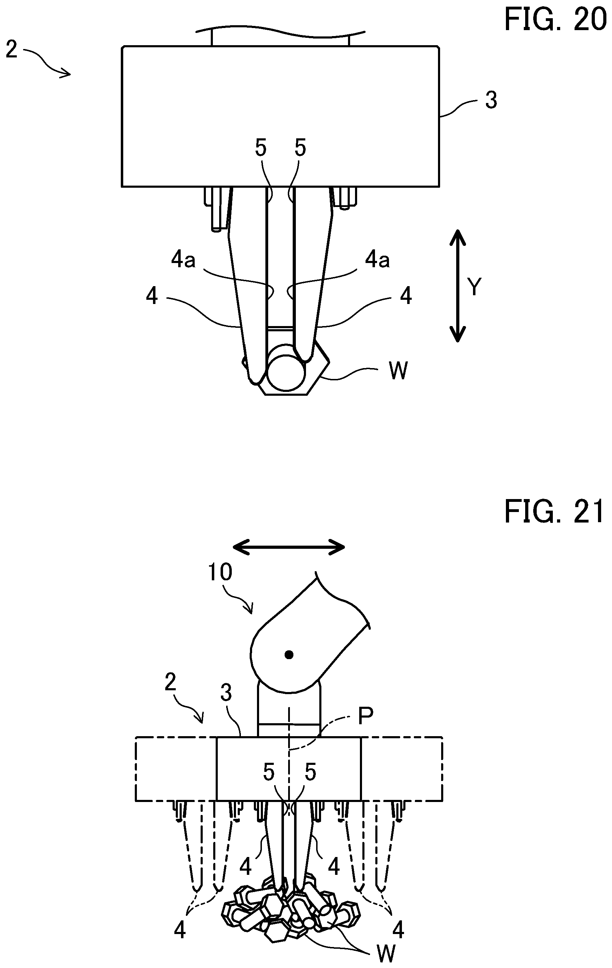

FIG. 18 is a schematic view for describing an example of a search action of the hand 2. FIG. 19 is a schematic view illustrating a case where the workpiece W is successfully drawn. FIG. 20 is a schematic view illustrating a state of the fingers 4 during drawing of the workpiece W. For example, as illustrated in FIG. 18, the operation controller 106 reciprocates the hand 2 in the directions of the reference axis P with the reference axis P directed toward the workpiece W. Since the fingers 4 extend in the directions of the reference axis P, the hand 2 moves in the extension directions of the fingers 4. That is, in this search action, the relative position between the fingers 4 and the workpiece W in the directions of the reference axis P is changed.

Since the approximate position of the bulk-loaded workpieces W has been determined by the detector 105, the operation controller 106 brings the fingers 4 closer to the workpiece W until the distal ends of the fingers 4 reach the workpiece W in the directions of the reference axis P. At this time, the operation controller 106 moves the fingers 4 further toward the workpiece W than the position of the workpiece W detected by the detector 105. Since the fingers 4 are elastically displaceable in the second directions Y, even when the fingers 4 contact the workpiece W, impact on the fingers 4 is absorbed by elastic displacement of the fingers 4 in the second directions Y. Thus, the distal ends of the fingers 4 are brought into contact with any one of the workpieces W. Further, the elastic deformation of the fingers 4 in the second directions Y elastically presses the fingers 4 against the workpiece W. That is, the fingers 4 are pressed against the workpiece W with an appropriate load. The operation controller 106 may bring the fingers 4 closer to the workpiece W until the determiner 107 determines arrival of the distal ends of the fingers 4 at the workpiece W based on the detection result of the sensor 210.

Since the endless belt 5 is rotated toward the drawing side, when the distal ends of the fingers 4 come into contact with any workpiece W and the workpiece W fits between the distal ends of the fingers 4, the workpiece W is drawn into the space between the fingers 4 using the endless belt 5, as illustrated in FIG. 19. By drawing the workpiece W into the space between the fingers 4, each finger 4 is elastically displaced in the first directions X, and the interval between the fingers 4 is automatically adjusted in accordance with the workpiece W.

In this example, in a state where the workpiece W is not drawn, a portion of the endless belt 5 of one finger 4 corresponding to the inner surface 4a and a portion of the endless belt 5 of the other finger 4 corresponding to the inner surface 4a are tilted such that the interval between the two portions narrows toward the distal ends. When the fingers 4 draw the workpiece W and each elastically displace in the first directions X, the portion of the endless belt 5 of one finger 4 corresponding to the inner surface 4a and the portion of the endless belt 5 of the other finger 4 corresponding to the inner surface 4a may be thereby in the state of being in parallel or tilted such that the interval between the two portions increases toward the distal ends.

In addition to the displacement of the fingers 4 in the first directions X, the endless belts 5 may also elastically deform. When the workpiece W is drawn into the space between the fingers 4, the endless belts 5 may elastically deform toward the opening side of the fingers 4. The interval between the fingers 4 is also automatically adjusted in accordance with the workpiece W by elastic deformation of the endless belts 5. Each endless belt 5 is deformable until the endless belt 5 comes into contact with the rollers 56. That is, large elastic deformation of the endless belt 5 is restricted by the rollers 56.

In addition, since the fingers 4 elastically displace in the second directions Y independently of each other, the workpiece W is more likely to be in contact with a portion of the endless belt 5 of any of the fingers 4 corresponding to the inner surface 4a. As illustrated in FIG. 20, depending on the state of contact between the fingers 4 and the workpiece W, the amount of elastic displacement in the second directions Y may differ among the fingers 4. That is, one first finger 4 (the left finger 4 in FIG. 20) is in a state of projecting further in the second directions Y than the other finger 4. A portion of the endless belt 5 of the finger 4 that has advanced in the second directions Y corresponding to the inner surface 4a is likely to contact the workpiece W. Consequently, drawing of the workpiece W into the space between the fingers 4 is facilitated.

The operation controller 106 moves the fingers 4 toward the workpiece W to a predetermined position as a search action, and then moves the distal ends of the fingers 4 away from the workpiece W in the direction of the reference axis P. The operation controller 106 repeatedly moves the fingers 4 toward and away from the workpiece W.

As the search action, the operation controller 106 may move the hand 2 such that the distal ends of the fingers 4 move in a plane intersecting the drawing direction of the fingers 4, that is, in a plane intersecting the reference axis P. FIG. 21 is a schematic view for describing another example of the search action of the hand 2. For example, as illustrated in FIG. 21, the operation controller 106 moves the hand 2 such that the distal ends of the fingers 4 move in a plane orthogonal to the drawing direction of the fingers 4 (i.e., the reference axis P). The plane intersecting the drawing direction of the fingers 4 is not limited to a plane, but also includes curved surfaces.

At this time, the operation controller 106 moves the hand 2 such that the distal ends of the fingers 4 move in a plane intersecting the drawing direction of the workpiece W while the distal ends of the fingers 4 are in contact with or close to the workpiece W. In this search action, the relative position between the fingers 4 and the workpiece W in the direction intersecting the drawing direction of the workpiece W is changed. Preferably, the operation controller 106 moves the hand 2 with the distal ends of the fingers 4 inserted into the group of workpieces W.

When the workpiece W fits between the distal ends of the fingers 4 while the fingers 4 are moving, the workpiece W is drawn into the space between the fingers 4 by the endless belt 5. Even if the workpiece W does not fit between the distal ends of the fingers 4, the position or posture of the workpiece W changes by contact of the distal ends of the fingers 4 with the workpiece W. When the position or posture of the workpiece W changes, the workpiece W may fit between the distal ends of the fingers 4 to be drawn into the space between the fingers 4.

In particular, in bulk-stacked workpieces W, the target workpiece W to be drawn can change due to movement of the fingers 4 in a plane intersecting the drawing direction of the fingers 4. That is, the hand 2 attempts to draw with respect to various workpieces W. This increases the probability that any one of the workpieces W fits between the fingers 4.

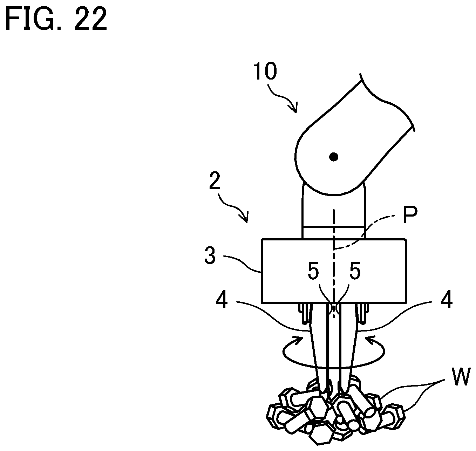

More specifically, the operation controller 106 moves the fingers 4 in a two-dimensional manner in a plane intersecting the drawing direction of the fingers 4. The movement of the fingers 4 in the plane intersecting the drawing direction, that is, two-dimensional movement when seen in the drawing direction, includes both linear movement and curved movement. For example, the operation controller 106 may move the fingers 4 in a zigzag pattern, or may rotate or reciprocate the fingers 4, in the plane intersecting the drawing direction of the fingers 4. FIG. 22 is a schematic view for describing another example of the search action of the hand 2. For example, as the search action, the operation controller 106 may move the hand 2 such that the fingers 4 rotate about a predetermined rotation axis in a plane intersecting the drawing direction of the fingers 4. The rotation axis may be either an axis parallel to the reference axis P or an axis non-parallel to the reference axis P. In the example illustrated in FIG. 22, the rotation axis coincides with the reference axis P. Furthermore, the rotation axis may be an axis eccentric from the reference axis P. That is, rotation includes revolution. The revolution includes various types of revolutions such as revolution on a circular orbit, revolution on a helical orbit, or revolution on a polygon orbit.

In the search action, the operation controller 106 may move the hand 2 such that the fingers 4 scan within a predetermined range in a plane intersecting the drawing direction of the fingers 4. For example, based on the workpieces W detected by the detector 105, the operation controller 106 sets a scanning range including the group of workpieces W. The operation controller 106 moves the hand 2 such that the fingers 4 move regularly or irregularly within the scanning range.

Alternatively, the operation controller 106 may move the hand 2 such that the fingers 4 perform composite movement as a mixture of movement in the drawing direction of the fingers 4 and movement in a direction intersecting the drawing direction of the fingers 4. For example, the operation controller 106 may change the positions of the fingers 4 in a direction intersecting the drawing direction of the fingers 4 or may change (i.e., rotate) angular positions of the fingers 4 about the reference axis P, when the fingers 4 move toward the workpieces W during movement of the fingers 4 toward and away from the workpieces W.

When the search action starts, in step S104, the determiner 107 determines whether drawing of the workpiece W into the space between the fingers 4 has been completed or not. Since the endless belt 5 has been rotated toward the drawing side, when the workpiece W fits between the distal ends of the fingers 4, the workpiece W is drawn into the space between the fingers 4 using the endless belt 5, as illustrated in FIG. 19. The determiner 107 determines a situation of drawing the workpiece W into the space between the fingers 4 based on a detection result of the sensor 210. For example, a predetermined position in the drawing direction between the fingers 4 is set at a drawing completion position of the workpiece W. The determiner 107 detects that the workpiece W has reached the drawing completion position based on the detection result of the sensor 210, and determines completion of drawing of the workpiece W based on arrival of the workpiece W at the drawing completion position.

If none of the workpieces W is drawn into the space between the fingers 4, the operation controller 106 returns to step S103 and continues the search action.

In this manner, the operation controller 106 attempts to draw the workpiece W by bringing the distal ends of the fingers 4 into contact with the workpiece W. By repeatedly changing the relative position between the distal ends of the fingers 4 and the workpiece W, drawing of the workpiece W into the space between the fingers 4 is repeatedly attempted. Even if drawing of the workpiece W fails, the position or posture of the workpiece W changes by contact of the fingers 4 with the workpiece W. Therefore, in subsequent drawing of the workpiece W, there is a possibility that the workpiece W may fit between the distal ends of the fingers 4. Accordingly, through repetitive search actions performed by the operation controller 106, the workpiece W may be eventually drawn into the space between the fingers 4.

In the case of a search action in which the hand 2 moves such that the distal ends of the fingers 4 move in a plane intersecting the drawing direction of the fingers 4, the position of the fingers 4 with respect to the workpiece W is changed in the plane intersecting the drawing direction. Even if position accuracy of the fingers 4 with respect to the workpiece W in the plane intersecting the drawing direction is low, the search action may allow the position of the workpiece W and the position of the fingers 4 to eventually match. In this manner, position control of the hand 2 can be simplified.

In the case of a search action in which the hand 2 moves such that the fingers 4 rotate about an axis parallel to the drawing direction, the posture of the fingers 4 with respect to the workpiece W is changed. In any case, the posture of the fingers 4 with respect to the workpiece W may be changed such that that the workpiece W fits between the distal ends of the fingers 4.

In particular, in bulk-stacked workpieces W, the contact of the fingers 4 with the workpiece W causes the workpieces W to move, and in subsequent drawing of the workpiece W, there is also a possibility of attempting to draw a workpiece W different from the previous workpiece W. That is, the hand 2 attempts to draw various workpieces W. This increase the possibility of successfully drawing the workpiece W.

In a case where the determiner 107 determines that drawing of the workpiece W into a space between the fingers 4 has started based on the detection result of the sensor 210, the operation controller 106 may temporarily stop the search action. That is, the operation controller 106 may maintain only rotation of the endless belt 5 and temporarily stop movement of the hand 2.

When drawing of the workpiece W is completed, the operation controller 106 finishes the search action in step S105. Specifically, the operation controller 106 stops rotation of the endless belt 5. In this manner, the controller 100 finishes the search action when the sensor 210 detects drawing of the workpiece W.

Subsequently, in step S106, the operation controller 106 causes the hand 2 and the robot arm 10 to transfer the workpiece W to a predetermined placing position. When the pick-and-place process for one workpiece W is completed, the imaging controller 104 performs the process in step S101 again.

In such a pick-and-place process, the controller 100 changes the relative position between the distal ends of the fingers 4 and the workpiece W through the search action, and repeatedly attempts to draw the workpiece W into the space between the fingers 4. The controller 100 continues the search action to thereby draw the workpiece W into the space between the fingers 4. The controller 100 does not perform opening and closing of the fingers 4 by the first motor 71 during the search action. That is, the controller 100 maintains a constant interval between the fingers 4 during the search action. By repeatedly performing the search action, the fingers 4 holds the workpiece W that has been drawn into the space between the fingers 4 eventually. The controller 100 can draw the workpiece W into the space between the fingers 4 without performing accurate position control of the fingers 4. Since accurate position control of the fingers 4 is not required, high resolution of the camera 15 and high detection performance of the detector 105 are not required, either.

Specifically, as a search action, the hand 2 reciprocates so that the distal ends of the fingers 4 repeatedly move toward and away from the workpiece W. Even if the workpiece W does not fit between the distal ends of the fingers 4, repetitive movement of the fingers 4 toward and away from the workpiece W changes the relative position and the relative posture of the workpiece W with respect to the fingers 4. Consequently, the workpiece W may eventually fit between the distal ends of the fingers 4.

In the search action, the hand 2 may move such that the distal ends of the fingers 4 move in a plane intersecting the drawing direction of the fingers 4. That is, in the search action, the hand 2 may move in any manner as long as the relative position between the distal ends of the fingers 4 and the workpiece W changes.

Since the hand 2 includes the sensor 210 that detects drawing of the workpiece W into the space between the fingers 4, the control device 100 can easily determine drawing of the workpiece W into the space between the fingers 4. That is, the controller 100 can determine whether to continue the search action based on the detection result of the sensor 210.

The hand 2 performs such draw-in holding on the bulk-loaded workpieces W. The controller 100 can draw any of the workpieces W into the space between the fingers 4 eventually by allowing the fingers 4 to access multiple workpieces W without specifying one workpiece W.

Further, since each of the fingers 4 have flexibility in both the first directions X and the second directions Y, the draw-holding as described above can be easily performed. That is, flexibility of the fingers increases the tolerance for position accuracy of the fingers 4, and consequently, simplifies and accelerates control of the hand 2. For example, by moving the hand 2 in the second directions Y in moving the fingers 4 toward the workpiece W, even if the fingers 4 interfere with other objects such as the workpiece W, the fingers 4 can elastically displace in the second directions Y. Accordingly, the tolerance for position errors of the hand 2 in moving the fingers 4 toward the workpiece W or other objects increases. Alternatively, even if the opening degree of the fingers 4 does not exactly match the size of the workpiece W in holding the workpiece W with the fingers 4, the fingers 4 displaces in the first directions X in accordance with the size of workpiece W, and thus, can appropriately hold the workpiece W. This increases the tolerance for positional errors in the opening/closing directions of the fingers 4 in holding the workpiece W with the fingers 4. In this manner, the tolerance for both position accuracy of the fingers 4 when moving the fingers 4 toward other objects including the workpiece W and the position accuracy of the fingers 4 in the opening/closing directions when holding the workpiece W increases. Since the required accuracy concerning the position of the fingers 4 is reduced, control of the hand 2 can be simplified, and consequently, can be accelerated.

Furthermore, portions of the endless belts 5 corresponding to the distal ends of the fingers 4 are tilted such that the interval between the fingers 4 expand toward the distal ends of the fingers 4. The tilted portions of the endless belts 5 function as guides that draw the workpiece W into the space between the fingers 4. By performing the search action using the fingers 4 that are spaced apart from each other at the distal ends, the workpiece W can be easily drawn at random into the space between the fingers 4.

To achieve flexibility of each of the fingers 4, the finger body 42 is supported by the base 41 to be elastically displaceable in the first directions X and elastically displaceable in the second directions Y. Even with such a configuration, a rotation driving force of the second motor 81 is appropriately transferred to the endless belt 5 by the transfer 82. Specifically, the endless belt 5 is wound around the first pulley 51 and the second pulley 52 located in the finger body 42. When the finger body 42 displaces relative to the base 41, the endless belt 5, the first pulley 51, and the second pulley 52 also displace relative to the base 41. Even when the finger body 42 displaces, the rotation driving force is transferred to the first pulley 51 by the transfer 82. As a result, even in a configuration in which a driving source of the endless belt 5 is not located in the finger body 42, the endless belt 5 located in the finger body 42 that displace relative to the base 41 can be rotationally driven. Since the driving source is not located in the finger body 42, the configuration of the finger body 42 can be simplified and the finger body 42 can be made lightweight.

More specifically, the transfer 82 includes the first transfer pulley 86 located in the base 41, the second transfer pulley 87 located in the finger body 42, and the transmission belt 810 wound around the first transfer pulley 86 and the second transfer pulley 87. That is, the transfer 82 includes the belt transfer. The second transfer pulley 87 displaces relative to the first transfer pulley 86 in conjunction with relative displacement of the finger body 42 with respect to the base 41, and the transmission belt 810 transfers a rotation driving force from the first transfer pulley 86 to the second transfer pulley 87. In this manner, the transmission belt 810 flexibly responds to relative displacement of the finger body 42, and transfers the rotation driving force from the base 41 to the finger body 42.

In particular, the swing axis B of the finger body 42 with respect to the base 41 coincides with the axis of the second transfer pulley 87. Accordingly, even when the finger body 42 swings, the relative position of the second transfer pulley 87 with respect to the base 41, that is, the relative position of the second transfer pulley 87 with respect to the first transfer pulley 86, does not change. The transmission belt 810 can transfer rotation of the first transfer pulley 86 to the second transfer pulley 87 without being influenced by swing of the finger body 42, that is, displacement of the finger body 42 in the first directions X.

In addition, the finger body 42 is supported by the base 41 to be swingable about the axis of the first pulley 51. Even when the finger body 42 swings, the axis of the first pulley 51 does not displace. The axis of the first pulley 51 also coincides with the swing axis B of the finger body 42 and the axis of the second transfer pulley 87. That is, even when the finger body 42 displaces in the first directions X, the axis of the first pulley 51 and the axis of the second transfer pulley 87 do not displace, and thus, the transmission belt 810 is not affected.

The support shaft 44 rotatably supports the first pulley 51 and swingable supports the finger body 42. That is, the shaft that rotatably supports the first pulley 51 and the shaft that swingably supports the finger body 42 are shared. Accordingly, the configuration of the fingers 4 can be made compact.

In addition, the transfer 82 includes the first idle pulley 88 and the second idle pulley 89 that apply tension to the transmission belt 810. Even when the second transfer pulley 87 displaces relative to the first transfer pulley 86, the tension of the transmission belt 810 is appropriately maintained by the first idle pulley 88 and the second idle pulley 89. Accordingly, even if the finger body 42 displaces in various directions with respect to the base 41, the rotation driving force is appropriately transferred to the finger body 42 by the transmission belt 810.

Further, the first idle pulley 88 and the second idle pulley 89 are supported by the linkage 9 coupled to each of the base 41 and the finger body 42. Since the first idle pulley 88 and the second idle pulley 89 are supported by the linkage 9, the first idle pulley 88 and the second idle pulley 89 also displace in accordance with relative displacement of the finger body 42 so that the tension of the transmission belt 810 is maintained.

Specifically, the linkage 9 is a so-called four-bar linkage. The first transfer pulley 86 and the second transfer pulley 87 are located at one diagonal position, and the first idle pulley 88 and the second idle pulley 89 are located at the other diagonal position. When the first transfer pulley 86 and the second transfer pulley 87 move toward each other, the first idle pulley 88 and the second idle pulley 89 move away from each other. When the first transfer pulley 86 and the second transfer pulley 87 move away from each other, the first idle pulley 88 and the second idle pulley 89 move toward each other. Accordingly, the tension of the transmission belt 810 is maintained.

The diameters of the pitch circles of the first transfer pulley 86, the second transfer pulley 87, the first idle pulley 88, and the second idle pulley 89 are the same. Thus, a reaction force of a tension on a portion of the transmission belt 810 wound around two adjacent pulleys acts in the direction connecting the axis of the two pulleys. That is, the reaction force of the tension of the transmission belt 810 does not act as a moment about the axis of each pulley. Consequently, the reaction force of the tension of the transmission belt 810 does not act as a force that displaces the finger body 42, and thus, the position of the finger body 42 is stabilized.

In the finger 4 as described above, the torsion spring 45 that biases the finger body 42 toward the closing side of the finger 4 in the first directions X is located such that the axis of the torsion spring 45 is located at a position eccentric from the axis of the first pulley 51. In a case where the finger body 42 swingably supported by the base 41 is biased in the swinging direction by the torsion spring, the axis of the torsion spring tends to be arranged concentrically with the center of swing of the finger body 42. In this example, the center of the swing of the finger body 42 is the axis of the first pulley 51. However, arrangement of the axis of the torsion spring 45 at a position eccentric from the axis of the first pulley 51 can reduce the number of members arranged in the direction of the axis of the first pulley 51. This reduces the size of the finger 4 in the direction of the axis of the first pulley 51.

### <Variations>

Next, a variation of the robot system 1000 will be described. In the robot system 1000 according to the variation, the controller 100 moves the hand 2 and the robot arm 10 to move to a predetermined position to perform a search action without performing detection of workpieces W through image recognition.

Specifically, in the robot system 1000, an approximate position of workpieces W is determined. For example, the workpieces W are located within a predetermined range, specifically inside the container 19. Thus, the controller 100 moves the hand 2 and the robot arm 10 to a predetermined position corresponding to the workpieces W and causes the hand 2 and the robot arm 10 to perform a search action. For example, a predetermined depth position at the center of the container 19 in a plan view and within the container 19 is set as a start position for the search action. The controller 100 moves the hand 2 and the robot arm 10 so that the hand 2 is positioned at the start position, and then causes the hand 2 and the robot arm 10 to perform a search action. In this case, the controller 100 does not need to grasp an exact position of the workpieces W, and thus, does not perform detection of the workpieces W. For this reason, the robot system 1000 does not include the camera 15. The processor 101 of the controller 100 does not include the imaging controller 104 and the detector 105.

Through the search action described above, it is possible to achieve holding of the workpiece W even if the exact position of the workpiece W is not identified, and thus, detection of the workpiece W is unnecessary. Further, position accuracy of the hand 2 and the robot arm 10 is also relaxed. Consequently, it is possible to facilitate control for drawing the workpiece W.

In the robot system 1000 according to the variation, the controller 100 performs the search action by moving the hand 2 and the robot arm 10 along a predetermined target path without performing path planning for the search action.

Specifically, in a case where the approximate position of the workpieces W is fixed, the target path of the robot arm 10 is set beforehand. The target path is set such that the hand 2 and the robot 1 move to the approximate position of the workpieces W and perform a search action. Since the approximate position of the workpieces W is fixed, the target path remains constant and unchanged. Thus, the controller 100 does not perform path planning for picking the workpiece W each time. The controller 100 moves the hand 2 and the robot arm 10 along a predetermined target path and causes the hand 2 and the robot arm 10 to perform a search action. In first picking, the controller 100 may perform path planning based on the approximate position of the workpieces W. In subsequent picking, the controller 100 moves the hand 2 and the robot arm 10 along an already set target path.

Since holding of the workpiece W is achieved by moving the hand 2 to the approximate position of the workpieces W and performing the search action described above, path planning corresponding to each workpiece W is unnecessary. Consequently, it is possible to facilitate control for drawing the workpiece W.

As another variation, the robot system 1000 may detect the workpiece W by a method other than detection from an image. For example, the robot system 1000 may detect the position of the workpieces W with the sensor 210. That is, since the workpieces W are housed in the container 19, the schematic two-dimensional position of the workpieces W is known. The controller 100 detects the position of the workpieces W in the depth direction of the container 19 based on the detection result of the sensor 210. Specifically, the detector 105 of the controller 100 detects an approximate position of the workpieces W based on the detection result of the sensor 210. The operation controller 106 generates a target path of the robot arm 10 based on the detected position of the workpieces W.

Even with approximate detection of the workpieces W by the sensor 210, it is possible to achieve drawing of the workpiece W into a space between the fingers 4 through the search action. Since complex processing such as image recognition is unnecessary, it is possible to facilitate control for drawing the workpiece W.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the number of fingers 4 included in the hand 2 may be three or more.

The configuration in which the fingers 4 are elastically displaceable in the first directions X is not limited to the configuration described above. The configuration in which the fingers 4 are elastically displaceable in the second directions Y is not limited to the configuration described above. As long as the fingers 4 elastically displace in the first directions X and the second directions Y, the hand 2 may adopt any configuration. For example, in terms of the first directions X, the finger body 42 may be elastically displaceable in the opening/closing directions A, rather than in an arc direction about the swing axis B. For example, the base 41 of the finger 4 may support the finger body 42 to be slidable in the opening/closing directions A, and the finger body 42 may be biased to the closing side in the opening/closing directions A with respect to the base 41 by an elastic member such as a spring. The base 41 is supported by the hand body 3 to be movable in the opening/closing directions A, and is driven in the opening/closing directions A by the opening/closing actuator 7, as described in the above example. The finger body 42 elastically displaces in the opening/closing directions A with respect to the base 41. In this case, the first directions X are straight line directions in the opening/closing directions A, different from the arc about the swing axis B described above.

In terms of the second directions Y, the hand body 3 may be elastically supported to be displaceable in the second directions Y with respect to the robot arm 10. Specifically, the hand 2 may include a guide that supports the hand body 3 such that the hand body 3 is slidable in the second directions Y with respect to the robot arm 10, and an elastic member such as a spring that biases the hand body 3 to the advancing side in the second directions with respect to the robot arm 10.

In the hand 2 in which the finger body 42 is supported to be linearly elastically displaceable in the opening/closing directions A with respect to the base 41, in terms of the second directions Y, the finger body 42 may be supported to be elastically displaceable in the second directions Y with respect to the base 41, or the hand body 3 may be supported to be elastically displaceable in the second directions Y with respect to the robot arm 10.

The transfer 75 and the transfer 82 are not limited to the configuration described above. The transfer 75 and the transfer 82 may be changed in accordance with the configuration of the fingers 4. For example, the transfer 82 may employ any configuration in accordance with the configuration of the fingers 4 that are elastically displaceable in the first directions X and the second directions Y. As long as the rotation driving force is transferred to the first pulley 51, the transfer 82 may include a gear train instead of, or in addition to, the belt and the pulley.

The controller 100 may not control the camera 15. For example, the controller 100 may receive an image of the inside of the container 19 from an external source rather than from the camera 15. Alternatively, the camera 15 may be attached to the robot arm 10. In this case, the control device 100 controls the robot arm 10 to move the camera 15 to an appropriate imaging position when acquiring an image with the camera 15.

The image used by the controller 100 to detect the workpieces W may be a two-dimensional image. In the case of performing a search action, position accuracy of the fingers 4 with respect to the workpiece W may be low, and thus, detection accuracy of the workpiece W may also be low. Thus, detection of the workpiece W may be performed based on a two-dimensional image.

The robot controller 120 may be configured integrally with the controller 100, instead of being a separate component from the controller 100. That is, the controller 100 may also have the function of the robot controller 120.

The endless belt 5 may not be a timing belt. The first pulley 51 and the second pulley 52 may not be timing pulleys. That is, the endless belt 5, the first pulley 51, and the second pulley 52 may transfer rotation through a friction force.

The sensor 210 is not limited to a TOF type distance sensor. For example, the sensor 210 can be a triangulation distance sensor. The sensor 210 is not limited to a distance sensor. For example, the sensor 210 may be a current sensor or a torque sensor located in the rotation actuator 8. The controller 100 can determine an increase in rotational resistance of the endless belt 5 based on a detection result of the current sensor or the torque sensor. The controller 100 can determine that the workpiece W has been drawn into the space between the fingers 4 based on the increase in rotation resistance of the endless belt 5. Alternatively, the sensor 210 may be a sensor that detects contact of the workpiece W with a member such as a lever located between the fingers 4.

In the search action, the controller 100 may use a specific workpiece W, rather than multiple workpieces W, as a target workpiece W to be drawn, and bring the distal ends of the fingers 4 into contact with the specific workpiece W. For example, individual workpieces W may be dispersed in the container 19.

The bottom of the container 19 may not be flat, but may be curved that is recessed downward. That is, the container 19 may have a bowl shape. In this case, even when the workpiece W moves due to contact of the fingers 4 in the search action, the workpiece W naturally moves to a lowest portion of the container 19 after the fingers 4 have moved away from the workpiece W. That is, even when the search action is repeated, the workpiece W returns to the predetermined position in the container 19, and thus, the position of the fingers 4 does not need to be significantly changed in the search action.

The directions of the reciprocating movement of the hand 2 in the search action may be a direction non-parallel to the reference axis P, that is, a direction intersecting the reference axis P.

The determination of drawing of the workpiece W may be in synchronization with or may not be synchronized with the timings of movement of the fingers 4 toward and away from the workpiece W. For example, the controller 100 may perform determination of drawing of the workpiece W after the fingers 4 have completed movement toward the workpiece W, and if the workpiece W has not been drawn, the fingers 4 may be moved from the workpiece W. Alternatively, the controller 100 may repeatedly move the fingers 4 toward and away from the workpiece W and perform determination of drawing of the workpiece W independently of the timing of moving the fingers 4 toward and away from the workpiece W.

The flowchart is merely an example. The steps in the flowchart may be changed, replaced, added, omitted, or the like as appropriate. Further, the order of steps in the flowchart may be changed or serial processings may be performed in parallel. For example, if the position of the workpiece W is already known, steps S101 and S102 are omitted.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

[Aspects] The embodiment described above are a specific example of the following aspects.

(Aspect 1) A hand 2 includes: a hand body 3; and fingers 4 that are located on the hand body 3 and open and close, wherein each of the fingers 4 includes an endless belt 5 that is wound around at least a distal end of the finger 4, is rotationally driven, and contacts a workpiece W, and each of the fingers 4 is elastically displaceable in a first direction X in which the fingers 4 open and close, and elastically displaceable in a second direction Y in which the fingers 4 advance from and retract tothe hand body 3.

In this configuration, the workpiece W can be drawn from the distal ends of the fingers 4 into a space between the fingers 4 by rotating the endless belts 5. Since the fingers 4 are elastically displaceable in the second direction Y, position accuracy of the fingers 4 in the second direction Y with respect to the workpiece W can be relaxed. For example, even if the fingers 4 move over the workpiece W in bringing the distal ends of the fingers 4 into contact with the workpiece W, mutual impacts between the fingers 4 and the workpiece W are reduced by elastic displacement of the fingers 4 in the second direction Y. Further, in drawing the workpiece W into the space between the fingers 4, the interval between the fingers 4 is adjusted in accordance with the size of the workpiece W by elastic displacement of the fingers 4 in the first direction X. This increases the tolerance for position accuracy when moving the fingers 4 toward the workpiece W and the tolerance for accuracy of the interval between the fingers 4. In addition, even if detection accuracy of the position of the workpiece W is low, the fingers 4 can hold the workpiece W. Alternatively, if the approximate position of the workpiece W is known, the fingers 4 can hold the workpiece W without exact detection of the position of the workpiece W. Consequently, control of the hand 2 can be facilitated. As a result, control of the hand 2 can be simplified or accelerated.

(Aspect 2) In the hand 2 of Aspect 1, each of the fingers 4 includes a base 41 supported by the hand body 3, and a finger body 42 supported by the base 41 to be elastically displaceable in the first direction X and supported by the base 41 to be elastically displaceable in the second direction Y, and the endless belt 5 is located on the finger body 42.

In this configuration, each of the fingers 4 has a divided structure including the base 41 and the finger body 42. The finger body 42 is elastically displaceable in the first direction X and the second direction Y with respect to the base 41.

(Aspect 3) The hand 2 of Aspect 1 or 2 further includes a transfer 82 that transfers rotation driving force for the endless belt 5, wherein the finger body 42 includes a first pully 51 and a second pully 52 around which the endless belt 5 is wound, and the transfer 82 transfers the rotation driving force to the first pully 51.

In this configuration, the endless belt 5, the first pully 51, and the second pully 52 displace together with the finger body 42 when the finger body 42 displaces in the first direction X and in the second direction Y. The transfer 82 is capable of transferring the rotation driving force even when the first pully 51 displaces together with the finger body 42.

(Aspect 4) In the hand 2 of any one of Aspects 1 to 3, the transfer 82 includes first transfer pully 86 located on the base 41, a second transfer pully 87 located on the finger body 42, a transmission belt 810 wound around the first transfer pully 86 and the second transfer pully 87, a first idle pully 88 that applies tension to the transmission belt 810, a second idle pully 89 that applies tension to the transmission belt 810, and a linkage 9 coupled to each of the base 41 and the finger body 42 and supporting the first idle pully 88 and the second idle pully 89.

In this configuration, the second transfer pully 87 displaces together with the finger body 42 when the finger body 42 displaces in the first direction X and in the second direction Y. Even in this case, the rotation driving force is transferred from the first transfer pully 86 on the base 41 to the second transfer pully 87 via the transmission belt 810. The transmission belt 810 receives tension from the first idle pully 88 and the second idle pully 89. The first idle pully 88 and the second idle pully 89 are supported by the linkage 9 coupled to each of the base 41 and the finger body 42. The linkage 9 deforms in accordance with displacement of the finger body 42. Accordingly, the state in which the first idle pully 88 and the second idle pully 89 appropriately apply tension to the transmission belt 810 is maintained.

(Aspect 5) In the hand 2 of any one of Aspects 1 to 4, the linkage 9 includes a first link 91 rotatably supporting the first idle pully 88 and coupled to the base 41 to be rotatable about an axis of the first transfer pully 86, a second link 92 rotatably supporting the first idle pully 88 and coupled to the finger body 42 to be rotatable about an axis of the second transfer pully 87, a third link 93 rotatably supporting the second idle pully 89 and coupled to the finger body 42 to be rotatable about the axis of the second transfer pully 87, and a fourth link 94 rotatably supporting the second idle pully 89 and coupled to the base 41 to be rotatable about the axis of the first transfer pully 86, and the first transfer pully 86, the second transfer pully 87, the first idle pully 88, and the second idle pully 89 have an identical pitch circle diameter.

In this configuration, the linkage 9 is a four-bar linkage. The first transfer pully 86, the second transfer pully 87, the first idle pully 88, and the second idle pully 89 are located at joints, that is, at diagonal positions, of the four-bar linkage. The first transfer pully 86, the second transfer pully 87, the first idle pully 88, and the second idle pully 89 have an identical pitch circle diameter. Accordingly, a reaction force of tension of the transmission belt 810 acts in parallel with a straight line connecting joints at both ends of each link. That is, the reaction force of tension of the transmission belt 810 does not act as a moment about each joint. Since the reaction force of tension of the transmission belt 810 does not act as a force for displacing the finger body 42, the position of the finger body 42 is stabilized.

(Aspect 6) In the hand 2 of any one of Aspects 1 to 5, the linkage 9 includes a first link 91 rotatably supporting the first idle pully 88 and coupled to the base 41 to be rotatable about an axis of the first transfer pully 86, a second link 92 rotatably supporting the first idle pully 88 and coupled to the finger body 42 to be rotatable about an axis of the second transfer pully 87, a third link 93 rotatably supporting the second idle pully 89 and coupled to the finger body 42 to be rotatable about the axis of the second transfer pully 87, and a fourth link 94 rotatably supporting the second idle pully 89 and coupled to the base 41 to be rotatable about the axis of the first transfer pully 86, and the first link 91, the second link 92, the third link 93, and the fourth link 94 have an identical length.

In this configuration, the linkage 9 is a four-bar linkage and is an equilateral linkage in which the lengths of the links are equal. Accordingly, the linkage 9 can be made compact.

(Aspect 7) In the hand 2 of any one of Aspects 1 to 6, the finger body 42 is supported by the base 41 to be swingable about an axis of the first pully 51 and swings about the axis of the first pully 51 to thereby displace in the first direction X.

In this configuration, a swing axis B of the finger body 42 and the axis of the first pully 51 are coaxial. Even when the finger body 42 swings with respect to the base 41, the axis of the first pully 51 does not displace. The swing of the finger body 42 does not affect transfer of the rotation driving force to the first pully 51. Accordingly, the rotation driving force can be easily transferred to the first pulley 51 located on the swinging finger body 42.

(Aspect 8) The hand 2 of any one of Aspects 1 to 7 further includes a torsion spring 45 that biases the finger body 42 toward a closing side of the finger 4 in the first direction X, and an axis of the torsion spring 45 is located at a position that is eccentric from the axis of the first pully 51.

In this configuration, the axis of the torsion spring 45 is located at the position eccentric from the axis of the first pully 51, and thus, the number of members arranged in the direction of the axis of the first pully 51 can be reduced. This reduces the size of the finger 4 in the direction of the axis of the first pulley 51.

(Aspect 9) In the hand 2 of any one of Aspects 1 to 8, each of the fingers 4 includes a first pully 51 that is rotationally driven, a second pully 52 located at a distal end of the finger 4, and a third pully 53 located between the first pully 51 and the second pully 52, wherein the endless belt 5 is wound around the first pully 51, the second pully 52, and the third pully 53, and an interval between the third pullies 53 of the fingers 4 is narrower than an interval between the second pullies 52 of the fingers 4.

In this configuration, since the interval between the third pullies 53 is narrower than the interval between the second pullies 52, the interval between the endless belts 5 of the fingers 4 expands from the third pullies 53 toward the distal ends of the fingers 4. Accordingly, the workpiece W can be easily drawn into the space between the fingers 4 from the distal ends of the fingers 4. That is, drawing of the workpiece W into the space between the fingers 4 is facilitated.

## Claims

1. A hand comprising:
a hand body; and
fingers that are located on the hand body and open and close, wherein
each of the fingers includes an endless belt that is wound around at least a distal end of the finger, is rotationally driven, and contacts a workpiece, and
each of the fingers is elastically displaceable in a first direction in which the fingers open and close, and elastically displaceable in a second direction in which the fingers advance from and retract to the hand body.

2. The hand according to claim 1, wherein
each of the fingers includes a base supported by the hand body, and a finger body supported by the base to be elastically displaceable in the first direction and supported by the base to be elastically displaceable in the second direction, and
the endless belt is located on the finger body.

3. The hand according to claim 2, further includes
a transfer that transfers a rotation driving force for the endless belt, wherein
the finger body includes a first pully and a second pully around which the endless belt is wound, and
the transfer transfers the rotation driving force to the first pully.

4. The hand according to claim 3, wherein
the transfer includes
a first transfer pully located on the base,
a second transfer pully located on the finger body,
a transmission belt wound around the first transfer pully and the second transfer pully,
a first idle pully that applies tension to the transmission belt,
a second idle pully that applies tension to the transmission belt, and
a linkage coupled to each of the base and the finger body and supporting the first idle pully and the second idle pully.

5. The hand according to claim 4, wherein
the linkage includes
a first link rotatably supporting the first idle pully and coupled to the base to be rotatable about an axis of the first transfer pully,
a second link rotatably supporting the first idle pully and coupled to the finger body to be rotatable about an axis of the second transfer pully,
a third link rotatably supporting the second idle pully and coupled to the finger body to be rotatable about the axis of the second transfer pully, and
a fourth link rotatably supporting the second idle pully and coupled to the base to be rotatable about the axis of the first transfer pully, and
the first transfer pully, the second transfer pully, the first idle pully, and the second idle pully have an identical pitch circle diameter.

6. The hand according to claim 4, wherein
the linkage includes
a first link rotatably supporting the first idle pully and coupled to the base to be rotatable about an axis of the first transfer pully,
a second link rotatably supporting the first idle pully and coupled to the finger body to be rotatable about an axis of the second transfer pully,
a third link rotatably supporting the second idle pully and coupled to the finger body to be rotatable about the axis of the second transfer pully, and
a fourth link rotatably supporting the second idle pully and coupled to the base to be rotatable about the axis of the first transfer pully, and
the first link, the second link, the third link, and the fourth link have an identical length.

7. The hand according to claim 3, wherein
the finger body is supported by the base to be swingable about an axis of the first pully and swings about the axis of the first pully to thereby displace in the first direction.

8. The hand according to claim 7, further including
a torsion spring that biases the finger body toward a closing side of the finger in the first direction, wherein
an axis of the torsion spring is located at a position that is eccentric from the axis of the first pully.

9. The hand according to claim 1, wherein
each of the fingers includes a first pully that is rotationally driven, a second pulley located at a distal end of the finger, and a third pulley located between the first pully and the second pully,
the endless belt is wound around the first pully, the second pully, and the third pully, and
an interval between the third pullies of the fingers is narrower than an interval between the first pullies of the fingers.
